(19) Europäisches Patentamt
European Patent Office
Office européen des brevets

(11) EP 4 052 877 A1

(12) **EUROPEAN PATENT APPLICATION**
published in accordance with Art. 153(4) EPC

(43) Date of publication:
**07.09.2022 Bulletin 2022/36**

(21) Application number: **20882531.5**

(22) Date of filing: **01.07.2020**

(51) International Patent Classification (IPC):
***B29B 11/16*** (2006.01) ***B32B 27/20*** (2006.01)
***B32B 27/36*** (2006.01) ***C08L 67/04*** (2006.01)
***C08L 101/00*** (2006.01) ***C08L 101/02*** (2006.01)
***C08L 101/16*** (2006.01) ***C08K 3/22*** (2006.01)
***C08K 3/26*** (2006.01) ***B29B 7/48*** (2006.01)
***B29C 48/08*** (2019.01) ***B29C 48/305*** (2019.01)
***B29C 48/40*** (2019.01)

(52) Cooperative Patent Classification (CPC):
**B29B 7/48; B29B 11/16; B29C 48/08; B29C 48/305; B29C 48/40; B32B 27/20; B32B 27/36; C08K 3/22; C08K 3/26; C08L 67/04; C08L 101/00; C08L 101/02; C08L 101/16**

(86) International application number:
**PCT/JP2020/025916**

(87) International publication number:
**WO 2021/084800 (06.05.2021 Gazette 2021/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2019 JP 2019199020**

(71) Applicant: **TBM Co., Ltd.**
**Tokyo 100-0006 (JP)**

(72) Inventor: **KUROKI Shigeki**
**Tokyo 104-0061 (JP)**

(74) Representative: **Papula Oy**
**P.O. Box 981**
**00101 Helsinki (FI)**

(54) **RESIN COMPOSITION AND MANUFACTURING METHOD OF RESIN MOLDED PRODUCT**

(57) An object of the present invention is to provide a technique capable of reducing the hydrolysis of a biodegradable resin at the time of molding with respect to a biodegradable resin-containing resin composition having a high water content. Provided is a resin composition comprising: a biodegradable resin and heavy calcium carbonate particles in a mass ratio of 50:50 to 10:90, in which 0.5% by mass or more and 3.5% by mass or less of calcium oxide is comprised relative to the resin composition, and 0.2% by mass or more of water is comprised relative to the resin composition.

EP 4 052 877 A1

## Description

Field

The present invention relates to a resin composition and a method for producing a resin molded product.

Background

Conventionally, biodegradable resins represented by a polylactic acid resin have attracted attention as environmentally friendly resins because the resins turn into substances that originally exist in nature due to actions such as hydrolysis under the environment and microbial metabolism, and are resins that are widely used and expected to be more widely used in application areas in the future.

However, the biodegradable resins have low hydrolysis resistance and thus there are problems in that the biodegradable resins are easily hydrolyzed at the time of molding and resin molded products obtained from the biodegradable resins tend to be inferior in strength. In view of such problems, Cited Literature 1 has suggested that the hydrolysis of the polylactic acid resin is reduced by blending zinc oxide or copper oxide in the polylactic acid resin composition including a predetermined metal salt.

Citation List

Patent Literature

Patent Literature 1: WO 2015/064566

Summary

Technical Problem

However, in molding under high humidity, the water content of the raw material resin composition to be molded may inevitably increase. In such a case, there is a possibility that the hydrolysis of the biodegradable resin cannot be sufficiently reduced by the conventional technique.

The present invention has been made in view of the above actual situations. An object of the present invention is to provide a technique capable of reducing the hydrolysis of a biodegradable resin at the time of molding with respect to a biodegradable resin-containing resin composition having a high water content.

Solution to Problem

As a result of intensive study for solving the above-described problems, the inventors of the present invention have found that the hydrolysis of the biodegradable resin can be reduced even when a biodegradable resin-containing resin composition having a high water content is used and that the above problems can be solved by blending a predetermined amount of heavy calcium carbonate particles and calcium oxide together with the biodegradable resin in the resin composition and thus the present invention has been attained. Specifically, the present invention provides the following.

(1) A resin composition comprising:

a biodegradable resin and heavy calcium carbonate particles in a mass ratio of 50:50 to 10:90, in which
0.5% by mass or more and 3.5% by mass or less of calcium oxide is comprised relative to the resin composition, and
0.2% by mass or more of water is comprised relative to the resin composition.

(2) The resin composition as described in (1), in which an average particle diameter of the heavy calcium carbonate particles is 1.0 μm or more and 10.0 μm or less.
(3) The resin composition as described in (1) or (2), in which a BET specific surface area of the heavy calcium carbonate particles is 0.1 $m^2$/g or more and 10.0 $m^2$/g or less.
(4) The resin composition as described in any one of (1) to (3), in which a roundness of the heavy calcium carbonate particles is 0.50 or more and 0.95 or less.
(5) The resin composition as described in any one of (1) to (4), in which the heavy calcium carbonate particles are

partially oxidized on a surface part of the heavy calcium carbonate particles.

(6) The resin composition as described in any one of (1) to (5), in which the biodegradable resin comprises polylactic acid.

(7) The resin composition as described in any one of (1) to (5), in which the biodegradable resin comprises a multicomponent hydroxyalkanoic acid copolymer made of lactic acid and a polyhydroxyalkanoic acid.

(8) The resin composition as described in (7), in which a lactic acid fraction in the multicomponent hydroxyalkanoic acid copolymer is 20% by mole or more and 80% by mole or less.

(9) The resin composition as described in any one of (1) to (8), in which the biodegradable resin comprises poly(L-lactic acid) having a weight average molecular weight (Mw) of 50,000 or more and 300,000 or less in a proportion of 10% by mass or more and 100% by mass or less relative to the entire biodegradable resin.

(10) The resin composition as described in any one of (1) to (9), in which the resin composition is in the form of pellets.

(11) A method for producing a resin molded product, the method comprising:

molding a resin composition, in which
the resin composition comprises a biodegradable resin and heavy calcium carbonate particles in a mass ratio of 50:50 to 10:90,
the resin composition comprises 0.5% by mass or more and 3.5% by mass or less of calcium oxide relative to the resin composition, and
a water content of the resin composition at the time of starting the molding is 0.2% by mass or more.

(12) The method for producing as described in (11), in which the molding is under an environment of a temperature of 0°C or more and 50°C or less and a relative humidity of 75% RH or more.

(13) The method for producing as described in (11) or (12), in which stretching treatment is not included.

(14) The method for producing as described in any one of (11) to (13), in which the molding comprises melting and kneading the resin composition at 140°C or more and 220°C or less using a twin-screw extruder; and thereafter molding the resin composition in a sheet-like product using a T die.

(15) The method for producing as described in any one of (11) to (14), in which the molding comprises melting and kneading the resin composition at 140°C or more and 220°C or less using a twin-screw extruder; and thereafter molding the resin composition by injecting the resin composition in a mold a mold temperature of which is maintained at 20°C or more and 110°C or less.

(16) The method for producing as described in any one of (11) to (15), in which the resin molded product is a laminated product,
the laminated product comprises

a resin layer made of the resin composition, and
a surface layer made of a biodegradable resin covering at least one surface of the resin layer.

(17) The method for producing as described in any one of (11) to (16), in which the resin molded product is a sheet.

(18) The method for producing as described in any one of (11) to (16), in which the resin molded product is a container product.

Advantageous Effects of Invention

According to the present invention, a technique capable of reducing the hydrolysis of a biodegradable resin at the time of molding is provided with respect to a biodegradable resin-containing resin composition having a high water content.

Description of Embodiments

Hereinafter, the embodiments of the present invention will be described in detail. The present invention, however, is not particularly limited to these embodiments.

<Resin composition>

The resin composition according to the present invention satisfies all of the following requirements.

(1) The biodegradable resin and the heavy calcium carbonate particles are included in a mass ratio of 50:50 to 10:90.

(2) Relative to the resin composition, 0.5% by mass or more and 3.5% by mass or less of calcium oxide is included.

(3) Relative to the resin composition, 0.2% by mass or more of water is included.

First, the inventors of the present invention have found that, in order to improve biodegradability of products including the biodegradable resin, it is remarkably effective that heavy calcium carbonate particles, that is, calcium carbonate particles obtained by mechanically crushing and classifying a natural raw material including $CaCO_3$ such as limestone as a main component are used as a filler or the inorganic substance powder and that the heavy calcium carbonate particles are blended in a proportion of 50% by mass or more relative to the entire composition. More specifically, in the molded product molded by using the biodegradable resin composition in which the heavy calcium carbonate particles are highly blended, it has been found that a state where a large number of fine voids around which the biodegradable resin composition does not adhere to the surface of the heavy calcium carbonate particles are formed or a state where a large number of parts in which adhesion is significantly weak exist is formed immediately after molding the molded product at the interface between the biodegradable resin constituting the matrix and the heavy calcium carbonate particles even without applying treatment such as stretching in particular at the time of molding because the heavy calcium carbonate particles have a shape such as an irregular shape originated from the production history of the heavy calcium carbonate particles and thus have a large specific surface area. It is conceived that, as a result, in the molded product, the surface area of the biodegradable resin becomes significantly high by the additional effect caused by large blended amount of the heavy calcium carbonate particles blended in the composition, and thus the field of decomposition of the molded product due to the action of the enzyme is improved dramatically, resulting in improving the efficiency the biodegradability.

In the case where the heavy calcium carbonate particles are blended as a filler, generation of the calcium oxide by partially oxidizing calcium carbonate at the surface site of the heavy calcium carbonate particles due to thermal history at the time of molding the biodegradable resin composition has been confirmed.

The heavy calcium carbonate particles can be produced from raw materials that exist in a large quantity in the natural world and there is no problem of blending the heavy calcium carbonate particles into the biodegradable resin in terms of environmental properties. In addition, it has been found that the high blend of the heavy calcium carbonate particle into the biodegradable resin allows the physical properties such as mechanical strength and heat resistance to be improved and this blend is also more advantageous in terms of cost.

Furthermore, the inventors of the present invention have found that, with respect to a biodegradable resin composition in which a biodegradable resin and an inorganic substance powder are blended, the biodegradable resin composition has both sufficient mechanical strength and flexibility as well as remarkably excellent degradability under an environment by forming a composition in which a multicomponent hydroxyalkanoic acid copolymer and heavy calcium carbonate are included in a range by mass of 10:90 to 70:30 using the multicomponent hydroxyalkanoic acid copolymer made of lactic acid and other polyhydroxyalkanoic acid as the biodegradable resin and using heavy calcium carbonate as the inorganic substance powder.

The remarkably excellent degradability in the environment is caused in one sense by the fact that the biodegradability of the polymer itself to be used obtained by copolymerizing lactic acid with other polyhydroxyalkanoic acid represented by hydroxybutyric acid, for example, becomes better than the biodegradability of polylactic acid, for example. In addition, the inventors of the present invention have found that use of heavy calcium carbonate particles, that is, calcium carbonate particles obtained by mechanically crushing and classifying a natural raw material mainly composed of $CaCO_3$ such as limestone serving as the inorganic substance powder blended in the biodegradable resin, and blend of these heavy calcium carbonate particles in an amount of 30% by mass or more relative to the entire composition significantly contribute to the excellent degradability. In a molded product molded using such a biodegradable resin composition, a large number of fine voids around which the biodegradable resin does not adhere to the surface of the heavy calcium carbonate particles are formed or a large number of parts in which adhesion is significantly weak exist, immediately after molding the molded product at the interface of the multicomponent hydroxyalkanoic acid copolymer serving as the biodegradable resin constituting the matrix and the heavy calcium carbonate particles even without applying treatment such as stretching, in particular, at the time of molding because the heavy calcium carbonate particles have a large specific surface area due to an irregular shape or the like originated from the production history thereof. Obviously, the characteristics become more significant when the stretching treatment is applied. As a result, in the molded product, it is presumed that the surface area of the biodegradable resin becomes significantly large, and thus the field of degradation of the molded product caused by the action of enzymes is dramatically increased, and in addition heavy calcium carbonate exists, resulting in improving efficiency of the biodegradability.

However, as described above, while the combination of the biodegradable resin and the heavy calcium carbonate particles improves the biodegradability of the product including the biodegradable resin, problems in that the hydrolysis of the biodegradable resin at the time of molding causes unstable production of the molded products and strength of the molded products varies have been newly found.

Therefore, as a result of further studies conducted by the inventors of the present invention, it has been found that blend of a predetermined amount of calcium oxide into the raw material resin composition to be molded in addition

to the biodegradable resin and the heavy calcium carbonate particles allows the hydrolysis of the biodegradable resin at the time of molding to be reduced even when the raw material resin composition having a high water content is used. In other words, according to the present invention, the hydrolysis of the resin molded product at the time of molding can be reduced without impairing the biodegradability of the resin molded product obtained from the biodegradable resin.

It has been conceived that the above-described action is exhibited by a substance having dehydration action. In the case where a substance known to have the dehydrating action (for example, silica gel) that is similar to calcium oxide was used in place of calcium oxide, however, the hydrolysis of the biodegradable resin at the time of molding has not been sufficiently reduced. Therefore, it is presumed that the above-described action is not limited to the dehydration action caused by calcium oxide.

Hereinafter, the constitution of the resin composition according to the present invention will be described in detail.

(Biodegradable resin)

Examples of the biodegradable resin used in the present invention include aliphatic polyester resins such as polyhydroxybutyrate, poly(3-hydroxybutyrate-co-3-hydroxyhexanoate) (PHBH), polycaprolactone, polybutylene succinate (PBS), polybutylene succinate/adipate (PBSA), polyethylene succinate (PBA), polylactic acid (PLA), polymalic acid, polyglycolic acid (PGA), polydioxanone, and poly(2-oxetanone); aliphatic-aromatic copolymer polyester resins such as polybutylene terephthalate/succinate (PETS), polybutylene adipate/terephthalate (PBAH), and polytetramethylene adipate/terephthalate; and mixtures of the aliphatic polyester resin or the aliphatic-aromatic copolyester resin with a natural macromolecule such as starch, cellulose, chitin, chitosan, gluten, gelatin, zein, soybean protein, collagen, and keratin. Of these resins, the aliphatic polyester resins are preferable from the viewpoints of processability, economic efficiency, and easy availability, and in particular polylactic acid is more preferable.

In the present specification, the term "polylactic acid" includes not only a polylactic acid homopolymer obtained by polycondensing a lactic acid component alone as a raw material monomer but also a polylactic acid copolymer obtained by using the lactic acid component with other monomer components that can be copolymerized with the lactic acid component as raw material monomers, and polycondensing these monomer components.

The other monomer components copolymerizable with lactic acid are not particularly limited and examples include oxyacids, divalent alcohols or polyvalent alcohols having a valence of three or more, aromatic hydroxy compounds, divalent carboxylic acids or polyvalent carboxylic acids having a valence of three or more, and lactones.

Examples of the oxyacids include glycolic acid, hydroxypropionic acid, hydroxybutyric acid, hydroxyvaleric acid, hydroxypentanoic acid, hydroxycaproic acid, hydroxybenzoic acid, and hydroxyheptanoic acid. Of these oxiacids, glycolic acid and hydroxycaproic acid are preferable.

Examples of the divalent alcohols include ethylene glycol, propylene glycol, propanediol, butanediol, heptanediol, hexanediol, octanediol, nonanediol, decanediol, 1,4-cyclohexanedimethanol, neopentyl glycol, diethylene glycol, triethylene glycol, polyethylene glycol, and polytetramethylene glycol. Examples of the polyvalent alcohols having a valence of three or more include glycerin, trimethylolpropane, and pentaerythritol.

Examples of the aromatic hydroxy compounds include hydroquinone, resorcin, and bisphenol A.

Examples of the divalent carboxylic acids include oxalic acid, succinic acid, adipic acid, sebacic acid, azelaic acid, dodecanedioic acid, malonic acid, glutaric acid, cyclohexanedicarboxylic acid, terephthalic acid, isophthalic acid, phthalic acid, naphthalene dicarboxylic acid, bis(4-carboxyphenyl)methane, anthracene dicarboxylic acid, bis(4-carboxyphenyl) ether, and sodium 5-sulfoisophthalate. Examples of the polyvalent carboxylic acids having a valence of three or more include trimellitic acid and pyromellitic acid.

Examples of the lactones include caprolactone, valerolactone, propiolactone, undecalactone, and 1,5-oxepan-2-one.

The components other than lactic acid contained in polylactic acid can be copolymerized within a range that does not impair the original biodegradability of polylactic acid. The amount proportion thereof is desirably 20% by mole or less, preferably 0% by mole or more and 10% by mole or less, and more preferably 0% by mole or more and 5% by mole or less relative to the entire constituents.

Polylactic acid has asymmetric carbons in the main chain and thus crystalline poly(L-lactic acid) and poly(D-lactic acid) with an optical purity of 100%, amorphous poly(DL-lactic acid) with an optical purity of 0%, and poly-lactic acid with an optical purity in between exist even in the case of the homopolymer consisting of a lactic acid unit alone.

In addition, formation of stereocomplex polylactic acid by mixing poly(L-lactic acid) and poly(D-lactic acid) in a solution or a molten state has also been known. A block copolymer including a poly(L-lactic acid) block and a poly(D-lactic acid) block has also been known.

In the present invention, the polylactic acid used as the biodegradable resin may be any of these polylactic acids. From the viewpoint of properties such as heat resistance, impact resistance, flexibility, or elasticity which are desired in the molded product to be obtained, the polylactic acids having suitable properties can be appropriately used.

Hereinafter, each type of the polylactic acids that can be used as the biodegradable resin in the present invention

will be described in more detail for facilitating more understanding. The polylactic acid or the biodegradable resin that can be used in the present invention, however, is not limited to the exemplified description described below.

[Poly(L-lactic acid) and poly(D-lactic acid)]

Poly(L-lactic acid) or poly(D-lactic acid) can be produced by, for example, a direct melt polymerization method, a solid phase polymerization method, a direct condensation polymerization method of lactic acid, and a melt ring-opening polymerization method of lactide. Of these methods, the melt ring-opening polymerization of lactide is economically preferable. At the time of producing poly(L-lactic acid) or poly(D-lactic acid) by the melt ring-opening polymerization method, L-lactide and D-lactide are used to introduce the L-form and D-form of lactic acid, respectively.

D-Lactide or D-lactic acid, which is a raw material of poly(D-lactic acid) unit, has a limited supply source and a small amount of distribution and market price of D-lactide or D-lactic acid is higher than that of L-lactide or L-lactic acid, which is a raw material of poly(L-lactic acid) unit. Consequently, use of poly(L-lactic acid) is preferable from the economical viewpoint in the aspect where crystalline polylactic acid is used.

In the polycondensation of poly(D-lactic acid) or poly(L-lactic acid), to D-lactide or D-lactic acid serving as a raw material of poly(D-lactic acid) unit or L-lactide or L-lactic acid serving as a raw material of poly(L-lactic acid) unit, a lactic acid component serving as a raw material of a symmetric lactic acid unit (that is, L-lactide or L-lactic acid in the case of poly(D-lactic acid), and, on the other hand, D-lactide or D-lactic acid in the case of poly(L-lactic acid)) and other copolymerizable monomer components can be blended to the extent that crystallinity of poly(D-lactic acid) or poly(L-lactic acid) is not significantly impaired, for example, 1% by mole or less relative to all constituents, and copolymerized.

Examples of the production of poly(D-lactic acid) or poly(L-lactic acid) by the melt ring-opening polymerization method include production in which melt ring-opening polymerization of D-lactide or L-lactide having an optical purity of 90% or more and 100% or less is performed in the presence of an alcohol-based initiator and a metal catalyst, and the synthesis is performed in the system in which the catalyst deactivator is added in an amount of 0.3 equivalent or more and 20.0 equivalents or less per 1 equivalent of the metal element of the metal catalyst.

Examples of the metal catalyst include fatty acid salts, carbonates, sulfates, phosphates, oxides, hydroxides, halides, and alcoholates of alkali metals, alkaline earth metals, rare earth metals, transition metals, aluminum, germanium, tin, antimony, and titanium. Of these metal catalysts, the fatty acid salts, carbonates, sulfates, phosphates, oxides, hydroxides, halides, and alcoholates of at least one metal selected from tin, aluminum, zinc, calcium, titanium, germanium, manganese, magnesium, and rare earth elements are preferable. These catalysts may be used singly or, in some cases, may be used in combination of two or more of the catalysts. The amount of the catalyst to be used is about $0.4 \times 10^{-4}$ mol or more and about $100.0 \times 10^{-4}$ mol or less per 1 kg of the lactide.

Examples of the deactivator used for the catalyst deactivation of the melt ring-opening polymerized polylactic acid in the presence of the metal catalyst include phosphoric acid, phosphorous acid, hypophosphorous acid, pyrophosphoric acid, trimetaphosphoric acid, tetrametaphosphoric acid, phenylphosphonic acid, benzylphosphinic acid, dibutyl phosphate, dinonyl phosphate, N'-bis(salicylidene)ethylenediamine, and N,N'bis(salicylidene)propanediamine. Of these deactivators, phosphoric acid, phosphorous acid, and pyrophosphoric acid are preferable. These deactivators may be used singly or, in some cases, may be used in combination of two or more of the deactivators. The amount of the deactivator to be used is in the range of about 0.4 equivalent or more and about 15.0 equivalents or less per 1 equivalent of the metal element.

Examples of the alcohol-based initiator include aliphatic monovalent alcohols having a carbon number of 1 to 22 such as methanol, ethanol, n-propyl alcohol, n-butyl alcohol, sec-butyl alcohol, pentyl alcohol, n-hexyl alcohol, cyclohexyl alcohol, octyl alcohol, nonyl alcohol, 2-ethylhexyl alcohol, n-decyl alcohol, n-dodecyl alcohol, hexadecyl alcohol, lauryl alcohol, ethyl lactate, and hexyl lactate; aliphatic polyvalent alcohols having a carbon number of 1 to 20 such as ethylene glycol, propylene glycol, propanediol, butanediol, pentanediol, hexanediol, octanediol, glycerin, sorbitan, neopentyl glycol, trimethylolpropane, and pentaerythritol; and poly alkylene glycols such as diethylene glycol, triethylene glycol, polyethylene glycol, polypropylene glycol, and in addition, ethylene oxide adducts of phenols, and ethylene glycol adduct of bisphenol. Of these alcohol-based initiators, stearyl alcohol, lauryl alcohol, ethylene glycol, propanediol, butanediol, hexanediol, polyethylene glycol, polypropylene glycol, and the like are preferable from the viewpoints of reactivity and physical properties of polylactide.

The amount of alcohol initiator to be used is primarily determined by considering a desired weight average molecular weight (Mw). For example, in the case of a monovalent alcohol, when polylactic acid having Mw of about 70,000 or more and about 110,000 or less is produced, 0.009 mol or more and 0.030 mol or less, and particularly preferably 0.014 mol or more and 0.021 mol or less of the alcohol initiator is used relative to 1 kg of lactide. Furthermore, when polylactic acid having Mw of about 100,000 or more and about 200,000 or less is produced, 0.009 mol or more and 0.020 mol or less, and particularly preferably 0.010 mol or more and 0.018 mol or less of the alcohol initiator is used relative to 1 kg of lactide. In the present specification, the weight average molecular weight (Mw) is a weight average molecular weight value in terms of standard polystyrene by gel permeation chromatography (GPC) measurement using

chloroform as an eluent.

In accordance with the conventionally known method, the mixture of the lactide, the catalyst, and the alcohol-based initiator can be polymerized by a continuous or batch process using a vertical polymerization vessel, a horizontal polymerization vessel, a tubular polymerization vessel, or a combination thereof in a temperature range of 180°C or more and 230°C or less for a reaction time of 2 hours to 10 hours while the heat of the reaction is being removed.

Generally, the thus obtained poly(D-lactic acid) or poly(L-lactic acid) has a melting point of about 165°C or more and about 185°C or less and a glass transition point (Tg) of about 55°C or more and about 60°C or less. The weight average molecular weight (Mw) is not particularly limited as long as, in the case where the molded product for the target application, for example, an extrusion molded product or an injection molded product is produced, the molded product exhibits substantially sufficient mechanical properties. Generally, poly(D-lactic acid) or poly(L-lactic acid) having a low molecular weight causes the strength of the obtained molded product to be lowered and the decomposition rate to be rapid, whereas poly(D-lactic acid) or poly(L-lactic acid) having a high molecular weight allows the strength to be improved but causes deterioration in processability and difficulty in molding. Therefore, the weight average molecular weight (Mw) is preferably 50,000 or more and 300,000 or less and more preferably 100,000 or more and 200,000 or less.

[Poly(DL-lactic acid)]

Poly(DL-lactic acid) is a random copolymer including the L-lactic acid units and the D-lactic acid units. The ratio of the L-lactic acid unit to the D-lactic acid unit is not particularly limited. In view of providing an amorphous property and flexibility, L-lactic acid unit/D-lactic acid unit is desirably about 60/40 to about 40/60 and more preferably about 55/45 to about 45/55. As described above, D-lactide or D-lactic acid, which is a raw material of the D-lactic acid unit, has a limited supply source and a small amount of distribution, and the market price of D-lactide or D-lactic acid is higher than that of L-lactide or L-lactic acid, which is the raw material of the poly(L-lactic acid) unit. Consequently, the blended amount of the L-lactic acid unit larger than the blended amount of the D-lactic acid unit is economically preferable even when poly(DL-lactic acid) is produced.

In the polycondensation of poly(DL-lactic acid), the other monomer components copolymerizable with the lactic acid component can be copolymerized by blending the other monomer components in a range not significantly impairing the properties such as biodegradability of poly(DL-lactic acid), for example, in a range of 20% by mole or less relative to the entire constituents.

As the method for producing poly(DL-lactic acid), similarly to the case of poly(L-lactic acid) and poly(D-lactic acid) described above, poly(DL-lactic acid) may be produced by, for example, the direct melt polymerization method, the solid phase polymerization method, the direct polycondensation method of lactic acid, and the melt ring-opening polymerization method of lactide. Basically, poly(DL-lactic acid) can be obtained in the same method as the above-described production of poly(L-lactic acid) or poly(D-lactic acid) except that the mixture of L-lactic acid or L-lactide and D-lactic acid or D-lactide in the predetermined mixing ratio described above is used in place of single use of L-lactic acid or L-lactide or D-lactic acid or D-lactide for introducing L-form or D-form of lactic acid serving as the raw material, respectively.

The glass transition point (Tg) of poly(DL-lactic acid) is preferably 45°C or more and 60°C or less and more preferably 50°C or more and 60°C or less. Poly(DL-lactic acid) is amorphous and thus does not indicate a melting point. The weight average molecular weight (Mw) of poly(DL-lactic acid) is not particularly limited as long as, when the molded product for the target application, for example, an extrusion molded product or an injection molded product is produced, the molded product exhibits substantially sufficient mechanical properties. Generally, poly(DL-lactic acid) having a low molecular weight causes the strength of the obtained molded product to be lowered and the decomposition rate to be rapid, whereas poly(DLlactic acid) having a high molecular weight allows the strength to be improved but causes deterioration in processability and difficulty in molding. Therefore, the weight average molecular weight (Mw) is preferably 50,000 or more and 300,000 or less and more preferably 100,000 or more and 200,000 or less.

[Stereocomplex polylactic acid]

Poly(L-lactic acid) and poly(D-lactic acid) have different stereoregularities from each other and thus when poly(L-lactic acid) and poly(D-lactic) acid are mixed and melted, and thereafter crystallized, a what is called stereocomplex is formed. In general, the stereocomplex product of polylactic acid is prepared from poly(L-lactic acid) and poly(D-lactic acid) as the raw materials. In addition to these poly(L-lactic acid) and poly(D-lactic acid) or in place of one of poly(L-lactic acid) and poly(D-lactic acid), a DL block copolymer of lactic acid described below can be used as the raw material to form the stereocomplex product. The order or the like of the addition of the compounds to the mixing apparatus for forming the stereocomplex product is not limited. Therefore, all the components of 2 to 3 or more components may be charged into the mixing apparatus at the same time or, for example, any one of the compounds may be charged into the mixing apparatus, and thereafter other components may be sequentially charged and mixed. At this time, each

compound may be in any shapes such as powders, granules, or pellets.

In the present invention, alternatively, in an aspect in which the resin including such a stereocomplex product of polylactic acid is used as the biodegradable resin, each component such as poly(L-lactic acid), poly(D-lactic acid), or DL block copolymer of polylactic acid may be charged simultaneously into the mixing apparatus to simultaneously form the stereocomplex product and to mix the biodegradable resin with the heavy calcium carbonate particles and calcium oxide at the time of mixing the heavy calcium bicarbonate particles, calcium oxide, and the biodegradable resin.

With respect to the mixing, for example, a mill roll, a mixer, and a single-screw or twin-screw extruder may be used to heat and knead. In other words, the stereocomplex product is formed by melting the mixture above the melting point thereof and then cooling the resultant mixture.

The temperature of the mixture may be within the temperature range in which the components included in the mixture are melted and is generally about 170°C or more and about 250°C or less. Poly(L-lactic acid), poly(D-lactic acid), and/or the block copolymer described below is uniformly kneaded by melting and mixing by heating and thereafter the resultant mixture is cooled and crystallized to form a stereocomplex. Although the melted mixture can be crystallized by cooling, the stereocomplex structure and a degree of crystallization may differ depending on the cooling conditions at the time of the cooling. The cooling rate can be appropriately selected depending on, for example, the weight average molecular weight, the mixing ratio, the weight average molecular weight ratio of poly(L-lactic acid), poly(D-lactic acid), and/or the block copolymer described below used as the raw materials. Generally, the cooling rate is not particularly limited. However, excessively rapid cooling fails to cause crystallization. The cooling is preferably performed at a cooling rate of 20 °C/min or more and 100 °C/min or less. The crystallization temperature is not particularly limited as long as the temperature is equal to or less than the melting point. The higher melting point of the melting points of poly(L-lactic acid) and poly(D-lactic acid) is determined to be the lower limit and melting is performed at a temperature preferably within the range of 50°C, more preferably within the range of 30°C, and particularly preferably in the range of 10°C to 20°C higher than the lower limit value. The pressure at the time of crystallization is not particularly limited and may be normal pressure. The crystallization may also be performed in an atmosphere of an inert gas such as nitrogen and may also be performed under an inert gas flow or under reduced pressure. In order to remove the monomer that is produced by decomposition during melting, the crystallization is preferably performed under reduced pressure. The presence or absence of crystallization can be confirmed by DSC or X-ray diffraction. The melting and mixing time is generally about 2 minutes or more and about 60 minutes or less. The melting point rises when the melting and mixing progress sufficiently and the stereocomplex is formed. Depending on the rise of the melting point, gradual rise of the melting temperature to such an extent that the melted mixture is not solidified is preferable because hardening due to crystallization can be avoided.

The melted mixture can also be molded into a plate or the like by extruding the melted mixture with a single-screw extruder or a twin-screw extruder or the stereocomplex can also be formed by performing a melt molding process such as melt spinning.

At the time of mixing the raw material compounds, a solvent that can dissolve or disperse the raw material compounds may be used. For example, poly(L-lactic acid), poly(D-lactic acid), and the polylactic acid block copolymer may be separately dissolved in each solution and the solvents may be removed after mixing these solutions. After distilling off the solvent, the mixture is heated to melt under the above-described conditions and thereafter cooled to form the stereocomplex. Therefore, the polylactic acid stereocomplex product can also be produced by solution casting in which the mixed solution is cast under heating.

The solvent used for the solution mixing is not particularly limited as long as the solvent can dissolve poly(L-lactic acid), poly(D-lactic acid), and/or the polylactic acid block copolymer. Examples of the solvent include chloroform, methylene chloride, dichloroethane, tetrachloroethane, phenol, tetrahydrofuran, N-methylpyrrolidone, N,N-dimethylformamide, butyrolactone, acetonitrile, 1,4-dioxane, trioxane, and hexafluoroisopropanol. These solvents may preferably be used singly or in combination of two or more of these solvents. The amount of the solvent is 100 parts by mass or more and 4,000 parts by mass or less and preferably 200 parts by mass or more and 3,000 parts by mass or less relative to 100 parts by mass of the total polylactic acid. The mixing may be performed by dissolving each of the polylactic acids in a solvent and mixing the resultant solutions or by dissolving one of the polylactic acids in the solvent and thereafter adding the other and mixing. The solvent can be removed by heating or reducing pressure.

The thus obtained polylactic acid stereocomplex product has a high melting point of 200°C or more and 230°C or less and exhibits high crystallinity as compared with poly(L-lactic acid) and poly(D-lactic acid). In the stereocomplex polylactic acid, a homophase may coexist with a complex phase. In order to exhibit further heat resistance of the stereocomplex polylactic acid, the stereocomplexation degree (S) defined by the following formula (a) is 80% or more and more preferably 90% or more.

$$S = [\Delta Hmsc/(\Delta Hmh + \Delta Hmsc)] \times 100 \quad (a)$$

(in Formula (a), ΔHmh is a heat of crystal fusion of a crystal melting peak of less than 190°C corresponding to the melting of the homophase crystals in DSC measurement, and ΔHmsc is a heat of crystal fusion of a crystal melting peak of 190°C or more corresponding to the melting of the complex phase crystals in DSC measurement).

The weight average molecular weight (Mw) of the polylactic acid stereocomplex product is not particularly limited as long as, when the molded product for the target application, for example, an extrusion molded product or an injection molded product is produced, the molded product exhibits substantially sufficient mechanical properties. Generally, stereocomplex polylactic acid having a low molecular weight causes the strength of the obtained molded product to be lowered and the decomposition rate to be rapid, whereas stereocomplex polylactic acid having a high molecular weight allows the strength to be improved but causes deterioration in processability and difficulty in molding. Therefore, the weight average molecular weight (Mw) is preferably 50,000 or more and 300,000 or less and more preferably 100,000 or more and 200,000 or less.

[Polylactic acid block copolymer]

The polylactic acid block copolymer is a stereoblock copolymer containing one or more L-lactic acid segments and D-lactic acid segments each. The L-lactic acid segment and the D-lactic acid segment mean a polymer formed of two or more of L-lactic acid or D-lactic acid. The weight average molecular weight (Mw) thereof is not particularly limited. The weight average molecular weight is preferably 500 or more and 300,000 or less and more preferably 5,000 or more and 100,000 or less. The segment having a molecular weight of less than 500 causes difficulty in forming the adjacent structure of the L-lactic acid segment and the D-lactic acid segment and may form a liquid or amorphous state. On the other hand, the segment having a molecular weight of more than 300,000 causes the fluidity to be lowered and thus the formation of the adjacent structure is also difficult. The optical purity of L-lactic acid and D-lactic acid constituting the L-lactic acid segment and the D-lactic acid segment, respectively, is preferably 85% ee or more and more preferably 90% ee or more. Lactic acid having an optical purity of less than 85% ee causes difficulty in forming the adjacent structure due to collapse of the symmetrical helical structures of each L-lactic acid segment and D-lactic acid segment and thus the crystallization promoting effect may deteriorate.

The blend proportion of the L-lactic acid segment and the D-lactic acid segment in the polylactic acid stereoblock copolymer is not particularly limited as long as at least one or more of each segment is copolymerized. The total number of the segments is preferably about 2 to about 2,000. The copolymer having the number of the segments of more than 2,000 results in deteriorating the effect of promoting the formation of the stereocomplex.

As a method for producing such a polylactic acid stereoblock copolymer, several methods have been conventionally developed and these methods used in the present invention are not particularly limited. For example: (1) The stereoblock copolymer including the L-lactic acid segments and the D-lactic acid segments can be obtained by sequential living ring-opening polymerization in which L-lactide and D-lactide are sequentially added in the presence of the polymerization initiator. (2) The stereoblock copolymer can be produced by melting and mixing and crystallizing the mixture of poly(L-lactic acid) and poly(D-lactic acid) having a weight average molecular weight of 5,000 or more, and thereafter extending a chain length by solid-phase polymerization at the melting temperature of the crystal or lower. (3) The stereoblock copolymer can also be produced by mixing poly(L-lactic acid) and poly(D-lactic acid) and thereafter extending the chain length by transesterification and/or dehydration condensation. (4) The stereoblock copolymer can be produced including a step of performing Diels-Alder reaction of poly(L-lactic acid) having anthracenyl groups or furanyl groups at both terminals of the polymer chain and poly(D-lactic acid) having a maleimide group at least one terminal of the polymer chain, or a step of performing Diels-Alder reaction of poly(D-lactic acid) having anthracenyl groups or furanyl groups at both terminals of the polymer chain and poly(L-lactic acid) having a maleimide group at least one terminal of the polymer chain. A method for obtaining poly(D-lactic acid) or poly(L-lactic acid) having anthracenyl groups or furanyl groups at both terminals of the polymer chain used herein is not particularly limited. Examples of the method include a method in which a coupling reaction of poly(L-lactic acid) having an anthracenyl group at one terminal of the polymer chain or poly(D-lactic acid) having an anthracenyl group at one terminal of a polymer chain obtained after dehydration condensation of L-lactic acid or D-lactic acid using an anthracene compound as the polymerization initiator with a diisocyanate compound is performed; and a method in which poly(L-lactic acid) having an anthracenyl group at one terminal of the polymer chain or poly(D-lactic acid) having an anthracenyl group at one terminal of the polymer chain is obtained by the ring-opening polymerization of L-lactide or D-lactide using an anthracene compound as the polymerization initiator, and thereafter coupling reaction is performed using the diisocyanate compound. The coupling reaction using the diisocyanate compound after the ring-opening polymerization of L-lactide or the dehydration condensation of L-lactic acid using an anthracene compound as the polymerization initiator allows poly(L-lactic acid) having the anthracenyl groups at both terminals to be obtained. The coupling reaction using the diisocyanate compound after the ring-opening polymerization of D-lactide or the dehydration condensation of D-lactic acid using an anthracene compound as the polymerization initiator allows poly(D-lactic acid) having the anthracenyl groups at both terminals to be obtained. The method for producing such a polylactic acid stereoblock copolymer also includes a method in which coupling reaction of poly(L-lactic

acid) having a furanyl group at one terminal of the polymer chain or poly(D-lactic acid) having a furanyl group at one terminal of the polymer chain obtained after dehydration condensation of L-lactic acid or D-lactic acid using a furan compound as the polymerization initiator with the diisocyanate compound is performed; and a method in which poly(L-lactic acid) having a furanyl group at one terminal of the polymer chain or poly(D-lactic acid) having a furanyl group at one terminal of the polymer chain is obtained by ring-opening polymerization of L-lactide or D-lactide using a furan compound as the polymerization initiator and thereafter coupling reaction is performed using the diisocyanate compound. The coupling reaction using the diisocyanate compound after the ring-opening polymerization of L-lactide or the dehydration condensation of L-lactic acid using a furan compound as the polymerization initiator allows poly(L-lactic acid) having the furanyl groups at both terminals to be obtained. The coupling reaction using the diisocyanate compound after the ring-opening polymerization of D-lactide or the dehydration condensation of D-lactic acid using a furan compound as the polymerization initiator allows poly(D-lactic acid) having the furanyl groups at both terminals to be obtained.

The thus obtained polylactic acid block copolymer has a melting point of about 100°C or more and about 170°C or less and a glass transition point (Tg) of about 30°C or more and about 60°C or less.

The biodegradable resin used in the biodegradable resin composition according to the present invention is not particularly limited as described above, and each type of polylactic acid preferably used is also not particularly limited. Any of these types of polylactic acid may be used alone or as a mixture. From the viewpoint of moldability, poly(L-lactic acid) is preferable.

In addition to the above-described viewpoint, from the viewpoints of economic efficiency and easy availability, poly(L-lactic acid) is desirably used as the main component as the biodegradable resin. In the present specification, the term "main component" usually means a component occupying 50% by mass or more of the total amount of the resin components. In particular, as one preferable embodiment, poly(L-lactic acid) is included in a range of 80% by mass or more and further preferably 90% by mass or more.

In the case where polylactic acid, in particular poly(L-lactic acid), is the main component as the biodegradable resin, the other components to be blended as the resin component may include polylactic acid other than the main component type of polylactic acid and the biodegradable resins other than the polylactic acid resin as described above.

In the case where, as the biodegradable resin, polylactic acid, in particular poly(L-lactic acid) is used as a main component, poly(L-lactic acid) having a weight average molecular weight (Mw) of 50,000 or more and 300,000 or less is preferably included in a proportion of 10% by mass or more and 100% by mass or less relative to the entire biodegradable resin.

(Multicomponent hydroxyalkanoic acid copolymer)

Preferable examples of the biodegradable resin used in the present invention include a multicomponent hydroxyalkanoic acid copolymer including lactic acid and other polyhydroxyalkanoic acid as comonomers.

The multicomponent hydroxyalkanoic acid copolymer is not particularly limited. Specifically, the multicomponent hydroxyalkanoic acid copolymer may include, for example, a lactic acid repeating unit (A) and other hydroxyalkanoic acid repeating unit (B) as illustrated in the following formula.

[Chemical Formula 1]

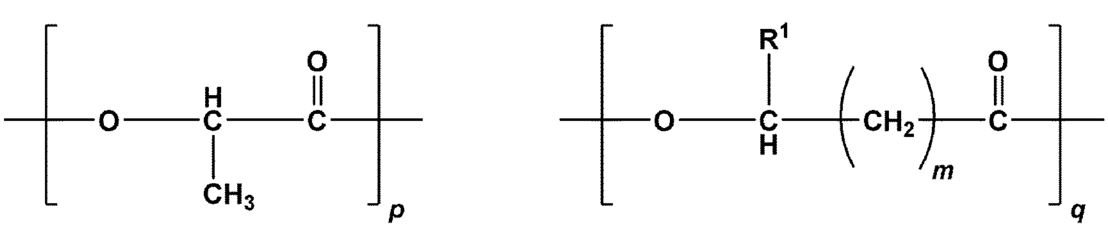

(A) (B)

Here, in the formula, R is an alkyl group represented by $C_nH_{2n+1}$ and, for example, n is an integer of 1 to 12 and more preferably an integer of 1 to 8. m is, for example, an integer of 1 to 3.

Specific examples of the other hydroxyalkanoic acid constituting the repeating unit (B) include 3-hydroxybutyric acid (3HB), 3-hydroxyvaleric acid (3HV), 3-hydroxyhexanoic acid (3HH), and 3-hydroxybutyrate-co-3-hydroxyhexanoate (PHBH), 3-hydroxyoctanoic acid, 3-hydroxydecanoic acid, 4-hydroxybutyric acid (4HB), and 4-hydroxyvaleric acid (4HV). Of these compounds, in particular, 3-hydroxybutyric acid (3HB), 3-hydroxybutyrateco-3-hydroxyhexanoate (PHBH), and the like are preferable and 3-hydroxybutyric acid (3HB) is more preferable.

Therefore, one preferable example of the multicomponent hydroxyalkanoic acid copolymer includes a lactic acid-3-hydroxybutyric acid copolymer, that is, poly(lactate-co-3-hydroxybutyrate) (P(LA-co-3HB)).

In the multicomponent hydroxyalkanoic acid copolymer, the other hydroxyalkanoic acid repeating unit (B) that is copolymerized with the lactic acid repeating unit (A) is not limited to a repeating unit derived from one kind of comonomer and may be a repeating unit derived from two kinds or more kinds of comonomers. In other words, the multicomponent hydroxyalkanoic acid copolymer may include not only two-component copolymers but also threecomponent copolymers or copolymers including more components.

As the comonomer constituting the multicomponent hydroxyalkanoic acid copolymer, both of lactic acid and the other hydroxyalkanoic acid have an asymmetric carbon in the main chain. Therefore, as the multicomponent hydroxyalkanoic acid copolymer, multicomponent hydroxyalkanoic acid copolymers having a crystalline D-form or L-form, an amorphous DL-form, and intermediate optical purity exist.

In the present invention, any of the multicomponent hydroxyalkanoic acid copolymer described above may be used as the multicomponent hydroxyalkanoic acid copolymer used as the biodegradable resin. From the viewpoint of desired properties such as heat resistance, impact resistance, flexibility, or elasticity in the molded product, the multicomponent hydroxyalkanoic acid copolymer having suitable properties can be appropriately used. The multicomponent hydroxyalkanoic acid copolymer may have any repeating units such as a block copolymer, a random copolymer, and a graft copolymer. The block copolymer may also include a form containing a D-form or L-form block polymer segment in the lactic acid repeating unit (A) and the other hydroxyalkanoic acid repeating unit (B) described above.

Although not particularly limited, in the multicomponent hydroxyalkanoic acid copolymer, a lactic acid fraction, that is, a value represented by $\{p/(p + q)\} \times 100$ in the above repeating units (A) and (B) is desirably preferably 20% by mole or more and 80% by mole or less. This is because the multicomponent hydroxyalkanoic acid copolymer having a lactic acid fraction of 20% by mole or more and 80% by mole or less allows better flexibility to be obtained even when, for example, a large amount of heavy calcium carbonate is blended with a multicomponent hydroxyalkanoic acid copolymer.

The optimum value of this lactic acid fraction varies also depending on the application of the resin composition according to the present invention. For example, in the case where the inorganic substance powder-containing biodegradable resin composition is used for vacuum molding, the lactic acid fraction is more preferably 50% by mole or more and 80% by mole or less. In other words, the molded product such as a container obtained by vacuum molding desirably has such a range in order to obtain sufficient mechanical strength. For example, in the case where the inorganic substance powder-containing biodegradable resin composition is used for inflation molding, the lactic acid fraction is desirably more preferably 20% by mole or more and 50% by mole or less. In other words, the film obtained by the inflation molding desirably has such a range in order to obtain sufficient stretchability and flexibility.

The weight average molecular weight (Mw) of the multicomponent hydroxyalkanoic acid copolymer is not particularly limited. The molecular weight thereof is not particularly limited as long as, in the case where the molded product for the target application, for example, a vacuum molded product or an inflation molded product is produced, the molded product exhibits substantially sufficient mechanical strength. Generally, the multicomponent hydroxyalkanoic acid copolymer having a low molecular weight causes the mechanical strength of the obtained molded product to be lowered and the biodegradation rate to be rapid, whereas the multicomponent hydroxyalkanoic acid copolymer having a high molecular weight allows the mechanical strength to be improved but causes deterioration in processability and difficulty in molding. Therefore, the weight average molecular weight (Mw) is preferably 50,000 or more and 300,000 or less and more preferably 100,000 or more and 200,000 or less.

Although not particularly limited, the melting point of the multicomponent hydroxyalkanoic acid copolymer is generally about 120°C or more and about 180°C or less, and desirably more preferably about 140°C or more and about 170°C or less. The multicomponent hydroxyalkanoic acid copolymer having a melting point within such a range allows various kinds of molding processability to be excellent.

The synthetic method for obtaining the multicomponent hydroxyalkanoic acid copolymer is not particularly limited as long as a predetermined composition can be obtained and any known methods may be used.

A biosynthesis method is known as a typical production method. Basically, for example, with respect to a microorganism having an enzyme having a polymerization activity for polyhydroxyalkane acid such as poly-3-butyric acid, the multicomponent hydroxyalkanoic acid copolymer containing lactic acid and the other hydroxyalkanoic acid, which is used in the present invention, can be obtained by culturing a mutant having an enzyme exhibiting a lactic acid polymerization activity in the coexistence with hydroxyalkanoic acid in biomass.

As such a mutant, a genetically modified bacterium in which a predetermined foreign gene is expressed in a microorganism by a gene recombination technique may be used.

More specifically described, for example, *Escherichia coli,* various lactic acid bacteria including *Lactobacillus, Bacillus subtilis,* and other eubacteria suitable for producing polylactic acid may be used as the genetically modified bacterium. In particular, genetically modified *Escherichia coli* can be preferably used.

As this genetically modified *Escherichia coli,* transformed *Escherichia coli* by plasmids (phagemids) containing

propionyl CoA transforming enzyme gene derived from *Megasphaera elsdenii,* polyhydroxy acid synthase gene having STQK mutation, β-ketothiolase gene derived from *Ralstonia eutropha,* and acetoacetyl-CoA reductase gene derived from *Ralstonia eutropha* is preferable. With respect to the polyhydroxyic acid synthase gene having STQK mutation, the gene in which yield and the like are further improved by an enzyme evolution engineering method that artificially randomly mutates and selects an enzyme with excellent characteristics may be used. In conformity with the bacterial species to be transformed, a bacterium may be transformed using a gene obtained by optimizing a codon or the like.

The multicomponent polyhydroxyalkanoic acid copolymer having a predetermined composition can be produced by culturing such a microorganism in biomass, for example, in a medium including a hot water extract of biomass.

The biomass used as a raw material may be derived from either woody plants or herbaceous plants as long as the biomass includes pentoses and hexoses as constituent sugars and can be used without particular limitation.

More specifically described, examples of the biomass derived from the woody plants include wood parts, barks, branches, and leaves of broad-leaf trees or coniferous trees; chips or barks of forest residual woods, thinned woods, and waste woods; sawdust generated from sawmills or the like, pruned branches and leaves of roadside trees, and construction waste materials. In addition, as biomass raw materials derived from herbaceous plants, biomass such as kenaf, hemp, bagasse, rice, rice straw, straw, and corn cob (including agricultural waste), residues and wastes of industrial crops such as crops for oil and crops for rubber, *Erianthus, Miscanthus,* and Napiergrass of herbaceous-based energy crops can also be used. For example, EFB (Empty Fruit Bunch) or the like can be used as the residues and wastes of the industrial crops. Of these biomasses, the biomass derived from the woody plants is preferably used and lignocellulosic-based biomass such as the wood parts of broad-leaf trees and coniferous trees is particularly preferably used.

These biomasses may be used singly or in combination of two or more of them. The biomass can be used as a dry solid, a solid including water, or a slurry. The biomass of the dry solid or the solid including water is preferably supplied to a heating and pressurizing device after the biomass is mixed with water to be in a slurry state.

A micronized product prepared by micronizing the part of wood parts and bark of the woody plants or the stems, branches, and leaves of the herbaceous plants may also be used. As the micronizing method, a method of such as pulverizing, crushing, or blasting with a refiner, a Wiley mill, a ball mill, or the like can be used.

In order to promote the reaction by the microorganisms, the hot water extract of the biomass as described above can be used.

The amount of water (liquid ratio) relative to the dry weight of the biomass at the hot water extraction treatment by the heating and pressurizing device is not particularly limited and may be, for example, about 1.0 to about 10.0 and preferably about 1.5 to about 5.0. The method of adding water in the hot water treatment is not particularly limited. Water may be added from the outside or water originally contained in the biomass may be used. In the case where steam is used during heating, water included in the steam may be used.

The treatment temperature of the hot water extraction treatment is, for example, 140°C or more and 200°C or less, and preferably 160°C or more and 170°C or less in a pressurized state. The treatment temperature of less than 140°C fails to obtain a sufficient sugar concentration, whereas the treatment temperature of more than 200°C causes hydrolysis of cellulose, overdecomposition of hemicellulose, or the like to occur, which is not preferable. The treatment time of the hot water extraction treatment is suitably 30 minutes or more and 120 minutes or less in a pressurized state at the above temperature. Here, the treatment time of less than 30 minutes fails to obtain a sufficient sugar concentration. Even when the treatment time exceeds 120 minutes, the concentration of the produced sugar hardly changes.

The original solution of the hot water extract obtained by the above heat treatment is concentrated under reduced pressure or using a permeable membrane or the like, if necessary. This concentration is preferably concentrated to a concentration suitable for acid hydrolysis, for example, to a concentration of 1.5 times to 30.0 times of the original solution.

Subsequently, the above concentrated solution is hydrolyzed in the presence of an acid to obtain a crude monosaccharide liquid. In this acid hydrolysis treatment, general acids such as sulfuric acid and hydrochloric acid used by those skilled in the art can be used. As the acid for the acid hydrolysis treatment, inorganic acids such as nitric acid and phosphoric acid or organic acids such as trifluoroacetic acid or formic acid may be used. As the time, temperature, pressure, and the like of the reaction of this acid hydrolysis treatment, general conditions known to those skilled in the art in which cellulose and hemicellulose are hydrolyzed can be used. For example, the acid hydrolysis treatment of the present embodiment may be acid hydrolysis treatment in which dilute sulfuric acid is added to the concentrated solution, the pH is adjusted to about 1.0, the reaction is performed at about 120°C for 60 minutes or more, and the precipitate is removed after neutralization.

The crude monosaccharide liquid may be, for example, a saccharified liquid saccharified by an enzyme such as cellulase or hemicellulase or a hydrosaccharified liquid saccharified by hydrothermal saccharification with subcritical water.

Subsequently, the above acid-hydrolyzed crude monosaccharide liquid is passed through a column or the like to be purified. Consequently, a purified solution (hereinafter referred to as "permeated liquid") in a state where the absorbance at a wavelength of 420 nm is 0.04 or less when the sugar concentration of sugar included in the aqueous

liquid of the hot water extract is 1% by mass or a purified sugar solution is obtained.

Using the biomass, in particular, the hot water extract obtained as described above as the only carbon source, microorganisms having an enzyme exhibiting lactic acid polymerization activity in the coexistence with hydroxyalkanoic acid are cultured under general culture conditions, whereby the multicomponent hydroxyalkanoic acid copolymer can be accumulated in the microorganism and recovered.

Specifically, the genetically modified *Escherichia coli* is aerobically cultured at 37°C for 12 hours to 90 hours using, for example, the above general medium for culturing *Escherichia coli,* whereby the multicomponent hydroxyalkanoic acid copolymer can be accumulated in the bacterial cells and recovered. At the time of this culture, a general medium such as an LB medium can be used. At the time of culturing, for example, ammonium salt, peptone, meat extract, yeast extract, or the like may be added as a nitrogen source. At the time of culturing, for example, phosphate, sulfate, sodium chloride, or the like may be added as an inorganic substance. At the time of culturing, antibiotics such as kanamycin, ampicillin, and tetracycline may be added to the medium for plasmid retention and culture may be performed.

The microorganism used for producing the multicomponent hydroxyalkanoic acid copolymer, for example, the genetically modified *Escherichia coli* described above accumulates the multicomponent hydroxyalkanoic acid copolymer in the cultured bacteria, and thus the recovered multicomponent hydroxyalkanoic acid copolymer can be easily collected from the recovered bacterial cells and produced. The multicomponent hydroxyalkanoic acid copolymer may be obtained by centrifuging and crushing the bacterial cells of these cultured bacteria and eluting the multicomponent hydroxyalkanoic acid copolymer with a general solvent such as chloroform and methanol. At the time of this elution, the residue or the like may be filtered with a filter such as a PTFE membrane.

The multicomponent hydroxyalkanoic acid copolymer can be prepared not only by the biosynthetic methods described above but also by chemical synthetic methods. More specifically, at the time of synthesizing poly(D-lactic acid), poly(L-lactic acid), and poly(DL-lactic acid) by, for example, a direct melt polymerization method, a solid phase polymerization method, a direct condensation polymerization method of lactic acid, and a melt ring-opening polymerization method of lactide, the multicomponent hydroxyalkanoic acid copolymer can be produced by using not only lactic acid but also the other monomers copolymerizable with the lactic acid component such as 3-hydroxybutyric acid (3HB), 3-hydroxyvaleric acid (3HV), 3-hydroxyhexanoic acid (3HH), 3-hydroxybutyrate-co-3-hydroxyhexanoate (PHBH), 3-hydroxyoctanoic acid, 3-hydroxydecanoic acid, 4-hydroxybutyric acid (4HB), and 4-hydroxyvaleric acid (4HV) and performing condensation polymerization of lactic acid and the other monomer.

In the case where the biodegradable resin uses the multicomponent hydroxyalkanoic acid copolymer as a main component, the multicomponent hydroxyalkanoic acid copolymer having a weight average molecular weight (Mw) of 50,000 or more and 300,000 or less is preferably included in a proportion of 10% by mass or more and 100% by mass or less relative to the entire biodegradable resin.

(Other resins)

In the resin composition according to the present invention, resins, suitably thermoplastic resins may be blended in addition to the biodegradable resin, if necessary. The blended amount of other thermoplastic resins is preferably 20% by mass or less relative to the total volume of the resin components so as not to substantially affect the biodegradability of the resin molded product obtained from the biodegradable resin composition according to the present invention. An aspect in which the blended amount is 10% by mass or less is more preferable and an aspect in which these other thermoplastic resins are not blended is particularly preferable. Examples of the thermoplastic resin include polyolefin resins such as polyethylene-based resins, polypropylenebased resins, poly(methyl-1-pentene), and ethylene-cyclic olefin copolymers; functional group-containing polyolefin resins such as ethylene-vinyl acetate copolymers, ethylene-acrylic acid copolymers, ethylene-methacrylic acid copolymers, metal salts of ethylene-methacrylic acid copolymers (ionomers), ethylene-acrylic acid alkyl ester copolymers, ethylene-methacrylic acid alkyl ester copolymers, maleic acid-modified polyethylene, and maleic acid-modified polypropylene; polyamide-based resins such as nylon-6, nylon-6,6, nylon-6,10, and nylon-6,12; thermoplastic polyester resins such as aromatic polyester-based resins including polyethylene terephthalate and copolymers thereof, polyethylene naphthalate, and polybutylene terephthalate, and aliphatic polyester-based resins including polybutylene succinate and polylactic acid; polycarbonate resins such as aromatic polycarbonates and aliphatic polycarbonates; polystyrene-based resins such as atactic polystyrene, syndiotactic polystyrene, acrylonitrile-styrene (AS) copolymers, and acrylonitrilebutadiene-styrene (ABS) copolymers; polyvinyl chloridebased resins such as polyvinyl chloride and polyvinylidene chloride; polyphenylene sulfide; and polyether-based resins such as polyethersulphone, polyetherketone, and polyetheretherketone.

(Heavy calcium carbonate particle)

In the resin composition according to the present invention, the heavy calcium carbonate particles are blended

together with the biodegradable resin composition. The heavy calcium carbonate is a product obtained by mechanically crushing and processing natural calcium carbonate as described below, and is clearly distinguished from synthetic calcium carbonate produced by chemical precipitation reaction or the like.

In the present specification, heavy calcium carbonate refers to a product produced by crushing and classifying natural calcium carbonate such as calcite (for example, limestone and marble), shell, and coral. Limestone serving as the raw material of heavy calcium carbonate is produced in abundance in Japan with a high degree of purity and can be economically obtained.

In the case where the multicomponent hydroxyalkanoic acid copolymer including lactic acid and hydroxyalkanoic acid is used as the biodegradable resin, the biodegradability of the multicomponent hydroxyalkanoic acid copolymer is promoted by using the heavy calcium carbonate particles together with the biodegradable resin because, for example, a large number of fine voids without adhesion are formed between the multicomponent hydroxyalkanoic acid copolymer serving as the biodegradable resin to be the matrix and the heavy calcium carbonate particle surface and alkaline components are eluted from the heavy calcium carbonate when water is penetrated into the voids at such interfaces.

Either a wet method or a dry method may be selected as the method for crushing heavy calcium carbonate. The dry crashing without the steps such as the dehydration step and the drying step is advantageous from the economical viewpoint. A crusher is also not particularly limited. An impact crusher, a crusher using a crushing medium such as a ball mill, a roller mill, and the like may be used.

The classification may be classification performed by air classification, wet cyclone, decanter, and the like. Surface treatment may be performed in any step of before crushing, during crushing, before classification, and after classification, and is preferably performed before classification. The surface treatment before classification allows the narrower particle size distribution to be obtained in high efficiency. A part of a surface treatment agent may be added as a grinding aid before crushing or during crushing and the remaining part may be added in a later step to perform the surface treatment.

In order to enhance dispersibility or reactivity of the heavy calcium carbonate particles, the surface of the heavy calcium carbonate particles may be previously subjected to surface modification. Examples of the surface modification method include physical methods such as plasma treatment and a method in which the surface is subjected to chemical surface treatment with a coupling agent or a surfactant. Examples of the coupling agent include silane coupling agents and titanium coupling agents. The surfactant may be any of anionic, cationic, nonionic, and amphoteric surfactants and examples thereof include higher fatty acids, higher fatty acid esters, higher fatty acid amides, and higher fatty acid salts.

The average particle diameter of the heavy calcium carbonate particles is preferably 1.0 μm or more and 10.0 μm or less and more preferably 1.0 μm or more and 3.0 μm or less. In particular, in the particle diameter distribution, particles having a particle diameter of 50.0 μm or more are preferably excluded. On the other hand, excessively fine particles cause the viscosity at the time of kneading with the above-described biodegradable resin to significantly increase and thus production of the molded products may be difficult. Therefore, the average particle diameter is preferably set to 1.0 μm or more. The average particle diameter of the inorganic substance powder (heavy calcium carbonate particles) described in the present specification refers to a value calculated from the measurement result of the specific surface area by the air permeation method in accordance with JIS M-8511. As a measuring instrument, for example, a specific surface area measuring apparatus Type SS-100 manufactured by Shimadzu Corporation can be preferably used.

Although depending on the layer thickness of the molded product, the resin composition including the heavy calcium carbonate particles having an average particle diameter of more than 10.0 μm may cause, when a sheetshaped molded product is formed using the composition, for example, the heavy calcium carbonate particles to be protruded from the surface of the molded product and thus the heavy calcium carbonate particles to fall off, or the surface properties, mechanical strength, or the like to be impaired.

Unlike light calcium carbonate and the like produced by the synthetic method, for example, surface irregularity and large specific surface area due to the particle formation by the crushing process are particularly important for the heavy calcium carbonate particles used in the present invention. There is a state where a large number of fine voids around which the biodegradable resin does not adhere to the surface of the heavy calcium carbonate particles are formed or a state where a large number of parts in which adhesion is significantly weak exist immediately after molding the molded product at the time of molding at the interface of the biodegradable resin constituting the matrix and the heavy calcium carbonate particles even without applying treatment such as stretching in particular because the heavy calcium carbonate particles blended in the biodegradable resin composition have such an irregular shape and large specific surface area.

From this reason, the specific surface area (BET specific surface area) of the heavy calcium carbonate particles is desirably 0.1 $m^2/g$ or more and 10.0 $m^2/g$ or less, more preferably 0.2 $m^2/g$ or more and 5.0 $m^2/g$ or less, and further preferably 1.0 $m^2/g$ or more and 3.0 $m^2/g$ or less. The BET adsorption method described here is in accordance with a nitrogen gas adsorption method. With respect to the molded product to be obtained, the heavy calcium carbonate particles having the specific surface area within this range allow the biodegradability under the natural environment to be excellently promoted because the biodegradable resin has many surfaces serving as the starting points of the biodegradation

reaction from the reasons described above and thus, at the same time, deterioration in processability of the resin composition due to the blend of the heavy calcium carbonate particles not to occur. The specific surface area (BET specific surface area) of the heavy calcium carbonate particles is specified by the method described in Examples.

The irregularity of the heavy calcium carbonate particles can be represented by the low degree of spheroidization of the particle shape. Specifically, the roundness is desirably 0.50 or more and 0.95 or less, more preferably 0.55 or more and 0.93 or less, and further preferably 0.60 or more and 0.90 or less. When the heavy calcium carbonate particles used in the present invention have the roundness within such ranges, a state where a large number of fine voids without adhesion are formed or a state where a large number of parts where adhesion is very weak exist is likely to be formed at the interface between the biodegradable resin forming the matrix and the heavy calcium carbonate particles. Therefore, the heavy calcium carbonate particles are suitable for enhancing biodegradability under the natural environment and, at the same time, provide appropriate mechanical strength and molding processability as the product.

Here, the roundness can be represented by (Projected area of particle)/(Area of a circle having the same perimeter as the projected perimeter of particle). The method for measuring the roundness is not particularly limited. For example, the projected area of the particle and the projected perimeter of the particle are measured from a micrograph and designated as (A) and (PM), respectively. When the radius of a circle having the same perimeter as the projected perimeter of the particle is designated as (r),

$$PM = 2\pi r \quad (1).$$

When the area of the circle having the same perimeter as the projected perimeter of the particle is designated as (B),

$$B = \pi r^2 \quad (2).$$

Transforming Formula (1) results in $r = PM/2\pi \quad (3)$.

Therefore, substituting Formula (3) into Formula (2) results in

$$B = \pi \times (PM/2\pi)^2 \quad (4).$$

Therefore, the roundness is determined as Roundness = $A/B = A \times 4\pi/(PM)^2$.

The particles to be measured are sampled so as to represent the particle size distribution of the powder. As the number of the measured particles becomes larger, the measured value becomes more reliable. In consideration of the measurement time, the roundness is said to be determined by the average value of the roundness of about 100 particles. In the present specification, the average value of the roundness of 100 particles are also used. The measurement is performed with generally commercially available image analysis software using the projection image of each particle obtained by a scanning microscope, a stereomicroscope, or the like, whereby the roundness can be determined.

The heavy calcium carbonate particles included in the resin composition according to the present invention are preferably heavy calcium carbonate particles that include a composition partially including calcium oxide formed by partially oxidizing the particle surface of the heavy calcium carbonate particles in a state of the molded product. The degree of this oxidation is not particularly limited. Excessive oxidation is not necessary because the effect of promoting biodegradability can be observed even in a relatively small portion of the particle surface, for example, a proportion sufficiently smaller than 2% of the volume of the particle. As the partial oxidation of the surface of the heavy calcium carbonate particles included in such a molded product, the heavy calcium carbonate particles used for molding are not required to be previously and separately subjected to heat treatment or the like. The heat history to which the heavy calcium carbonate particles are subjected when a molded product is produced by mixing and melting the biodegradable resin and the heavy calcium carbonate particles may cause surface oxidation. The formation of calcium oxide by oxidation on the particle surface can be confirmed and quantified by, for example, the EDTA titration method, the potassium permanganate titration method, or the like specified in JIS R 9011: 2006. The content of calcium oxide in the heavy calcium carbonate particles of which surface is partially oxidized is extremely small and thus this calcium oxide does not affect the content of calcium oxide blended in the resin composition according to the present invention described below. In other words, the content of calcium oxide in the resin composition according to the present invention does not include the content of calcium oxide generated by the partial oxidation of the heavy calcium carbonate particles.

The blend proportion (% by mass) of the biodegradable resin and the heavy calcium carbonate particles included

in the resin composition according to the present invention is not particularly limited as long as Biodegradable resin: Heavy calcium carbonate particles is in a ratio of 50:50 to 10:90. The ratio is preferably 40:60 to 20:80 and further preferably 40:60 to 25:75. This is because, with respect to the blend proportion of the biodegradable resin and the heavy calcium carbonate particles, the resin composition having a proportion of the heavy calcium carbonate of less than 50% by mass results in not obtaining the predetermined physical properties of the biodegradable resin molded product such as texture and impact resistance due to the blend of the heavy calcium carbonate particles, whereas the resin composition having a proportion of the heavy calcium carbonate of more than 90% by mass results in difficulty in molding processing such as extrusion molding and injection molding.

In the case where the multicomponent hydroxyalkanoic acid copolymer including lactic acid and hydroxyalkanoic acid is used as the biodegradable resin, the blend proportion (% by mass) of the multicomponent hydroxyalkanoic acid copolymer and the heavy calcium carbonate particles included in the resin composition according to the present invention is not particularly limited as long as Multicomponent hydroxyalkanoic acid copolymer: Heavy calcium carbonate particles is in a range of 50:50 to 10:90. The proportion is preferably 40:60 to 20:80 and further preferably 40:60 to 25:75. This is because, with respect to the blend proportion of the multicomponent hydroxyalkanoic acid copolymer and the heavy calcium carbonate particles, the resin composition having a proportion of the heavy calcium carbonate of less than 50% by mass results in not obtaining the predetermined physical properties of the molded product such as texture and impact resistance due to the blend of the heavy calcium carbonate particles and having inferior economic efficiency, whereas the resin composition having a proportion of the heavy calcium carbonate of more than 90% by mass results in difficulty in molding processing such as extrusion molding and injection molding.

The total amount of the biodegradable resin and the heavy calcium carbonate particle included in the resin composition according to the present invention is not particularly limited. The total amount is preferably 95.0% by mass or more and 99.5 % by mass or less and more preferably 96.5% by mass or more and 99.5% by mass or less.

(Calcium oxide)

The resin composition according to the present invention includes 0.5% by mass or more and 3.5% by mass or less of calcium oxide relative to the resin composition. In the present invention, the hydrolysis of the biodegradable resin at the time of molding can be reduced with respect to the biodegradable resin-containing composition having a high water content by blending such an amount of calcium oxide. Such an amount of calcium oxide is not likely to impair the action of the heavy calcium carbonate particles included in the biodegradable resin-containing composition and the biodegradability of the resin molded product obtained from the composition is excellent.

The lower limit of the calcium oxide content is preferably 0.5% by mass or more and more preferably 0.8% by mass or more relative to the resin composition. Blend of such an amount of calcium oxide allows the hydrolysis of the biodegradable resin at the time of molding to be further reduced.

The upper limit of the calcium oxide content is preferably 3.5% by mass or less and more preferably 2.0% by mass or less relative to the resin composition. Blend of such an amount of calcium oxide is likely to provide uniform mechanical properties of the resin molded product obtained from the resin composition according to the present invention.

The mass proportion of the biodegradable resin and calcium oxide is not particularly limited. From the viewpoint of being likely to exhibit the effects of the present invention, Biodegradable resin: Calcium oxide is preferably 99.5: 0.5 to 96.5: 3.5 and more preferably 99.2: 0.8 to 98.0: 2.0.

The shape and particle diameter of calcium oxide are not particularly limited. For example, calcium oxide having an average particle diameter of preferably 0.1 $\mu$m or more and 20.0 $\mu$m or less and more preferably 0.5 $\mu$m or more and 10.0 $\mu$m or less can be used.

(Water)

The resin composition according to the present invention includes 0.2% by mass or more of water relative to the resin composition. The biodegradable resin-containing composition having a high water content results in promoting the hydrolysis of the biodegradable resin and impairing the moldability of the resin composition. As a result, problems of unstable production of the molded products and generation of variation in strength of the molded products arise. According to the present invention, however, the hydrolysis of the biodegradable resin at the time of molding is reduced by the action of calcium oxide even when the water content in the biodegradable resin-containing composition is high.

The lower limit of the water content is preferably 0.2% by mass or more and more preferably 0.5% by mass or more relative to the resin composition. According to the present invention, the hydrolysis of the biodegradable resin at the time of molding can be reduced even when such a high content of water is included.

The upper limit of the water content is preferably 3.0% by mass or less and more preferably 2.0% by mass or less relative to the resin composition. The water content is preferably not excessive.

The origin of the water included in the resin composition according to the present invention is not particularly

limited. Examples of the water include water in the atmosphere in a molding environment, water inevitably included in the materials (resin and the like) of the resin composition, and water adsorbed onto the surface of the heavy calcium carbonate particles. Therefore, according to the present invention, for example, the resin composition can be molded even in a high humidity environment (0°C or higher and 50°C or lower and relative humidity 75% RH or higher) while the hydrolysis of the biodegradable resin at the time of molding is being reduced.

(Other additives)

Other additives may be added as auxiliary agents to the resin composition according to the present invention, if necessary. As other additives, for example, plasticizers, fillers other than heavy calcium carbonate particles, colorants, lubricants, coupling agents, fluidity improvers, dispersing agents, antioxidants, ultraviolet ray absorbers, flame retardants, stabilizers, antistatic agents, and foaming agents may be blended. These additives may be used singly or in combination of two or more of them. These additives may be blended in the kneading step described below or may be previously blended in the resin composition before the kneading step. In the resin composition according to the present invention, the amount of these other additives to be added is not particularly limited as long as the desired effect of the blend of the above-described biodegradable resin and the heavy calcium carbonate particles is not impaired. For example, each of these other additives is included desirably in a proportion of about 0% by mass or more and about 5% by mass or less and a total of the other additives is blended in a proportion of 10% by mass or less in the case where the mass of the entire resin composition is determined to be 100%.

Hereinafter, among these other additives, the additives considered to be important will be described. However, the other additives are not limited thereto.

For example, in the case where poly(L-lactic acid) or poly(D-lactic acid) having a high degree of crystallinity is used as the main component as the biodegradable resin, the plasticizer may be added for providing processability of the biodegradable resin and flexibility of the molded product to be obtained. Examples of the plasticizer include lactic acid, a lactic acid oligomer having a weight average molecular weight of about 3,000 or less, and branched polylactic acid (refer to, for example, WO 2010/082639).

Examples of the fillers other than the heavy calcium carbonate particles include carbonates (excluding heavy calcium carbonate), sulfates, silicates, phosphates, borates, oxides of calcium, magnesium, aluminum, titanium, iron, and zinc, or hydrates thereof in the form of powder. Specific examples include light calcium carbonate, magnesium carbonate, zinc oxide, titanium oxide, silica, alumina, clay, talc, kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, and graphite. These fillers may be synthetic fillers or fillers originated from natural minerals.

As the colorants, any of the known organic pigments, inorganic pigments, and dyes may be used. Specific examples include organic pigments such as azo, anthraquinone, phthalocyanine, quinacridone, isoindolinone, dioxazine, perinone, quinophthalone, and perylene pigments, and inorganic pigments such as ultramarine blue, titanium oxide, titanium yellow, and iron oxide (red iron oxide), chromium oxide, zinc white, and carbon black.

Examples of lubricants include fatty acid-based lubricants such as stearic acid, hydroxystearic acid, complex-type stearic acid, and oleic acid, aliphatic alcohol-based lubricants, aliphatic amide-based lubricants such as stearamide, oxystearamide, oleylamide, erucylamide, ricinolamide, behenamide, methylolamide, methylenebisstearamide, methylenebisstearobehenamide, bisamide acids of higher fatty acids, and complex-type amide, aliphatic ester-based lubricants such as n-butyl stearate, methyl hydroxystearate, polyvalent alcohol fatty acid esters, saturated fatty acid esters, and ester-based waxes, and fatty acid metal soap-based lubricants.

As the antioxidants, phosphorus-based antioxidants, phenol-based antioxidants, and pentaerythritol-based antioxidants can be used. More specifically, phosphorus-based antioxidants such as phosphorous acid esters and phosphoric acid esters are preferably used. Examples of the phosphorous acid esters include triesters, diesters, and monoesters of phosphorous acid such as triphenyl phosphite, tris(nonylphenyl) phosphite, and tris(2,4-di-t-butylphenyl) phosphite.

Examples of the phosphoric acid ester include trimethyl phosphate, triethyl phosphate, tributyl phosphate, trioctyl phosphate, triphenyl phosphate, tricresyl phosphate, tris(nonylphenyl) phosphate, and 2-ethylphenyl diphenyl phosphate. These phosphorus-based antioxidants may be used singly or in combination of two or more of the phosphorus-based antioxidants.

Examples of the phenol-based antioxidants include $\alpha$-tocopherol, butylhydroxytoluene, sinapyl alcohol, vitamin E, n-octadecyl-3-(3,5-di-t-butyl-4-hydroxyphenyl) propionate, 2-t-butyl-6-(3'-t-butyl-5'-methyl-2'-hydroxybenzyl)-4-methylphenyl acrylate, 2,6-di-t-butyl-4-(N,N-dimethylaminomethyl)phenol, 3,5-di-t-butyl-4-hydroxybenzylphosphonate diethyl ester, and tetrakis[3-(3,5-di-t-butyl-4-hydroxyphenyl)propionyloxymethyl]methane. These phenol-based antioxidants may be used singly or in combination of two or more of the phenol-based antioxidants.

The flame retardants are not particularly limited. For example, halogen-based flame retardants, phosphorus-based flame retardants and non-phosphorus-halogen-based flame retardants such as metal hydrates may be used. Specific examples of the halogen-based flame retardants include halogenated bisphenylalkanes, halogenated bisphenol-based compounds such as halogenated bisphenylethers, halogenated bisphenylthioethers, and halogenated bisphenylsulfones, and bisphenol-bis(alkyl ether)-based compounds such as brominated bisphenol A, brominated bisphenol S, chlorinated bisphenol A, and chlorinated bisphenol S. Examples of the phosphorus-based flame retardants include tris(diethylphosphinic acid) aluminum, bisphenol A bis(diphenyl phosphate), triaryl isopropyl phosphate compounds, cresyl di-2,6-xylenyl phosphate, and condensed aromatic phosphoric acid esters. Examples of the metal hydrates include aluminum trihydrate, magnesium dihydroxide, and a combination thereof. These flame retardants may be used singly or in combination of two or more of the flame retardants. These compounds act as flame retardant aids and can more effectively improve the flame-retardant effect. Furthermore, antimony oxides such as antimony trioxide and antimony pentoxide, zinc oxide, iron oxide, aluminum oxide, molybdenum oxide, titanium oxide, calcium oxide, and magnesium oxide can be used together as flame retardant aids.

The foaming agents are compounds that cause phase change from solid to gas or liquid to gas by mixing with or injecting with pressure into the resin composition serving as the raw material in a melted state in a melting and kneading apparatus or gas itself, and are mainly used for controlling an expansion ratio (foaming density) of a foamed sheet. As the foaming agent dissolved in the resin composition serving as the raw material, a foaming agent that is liquid at room temperature causes phase change into gas due to the resin temperature and is dissolved in the melted resin, and a foaming agent that is gas at room temperature is dissolved in the melted resin as it is without causing phase change. The foaming agent dispersed and dissolved in the melted resin expands inside the sheet because the pressure is released at the time of extruding the melted resin from the extrusion die into a sheet-like product to provide a foamed sheet by forming many fine closed cells inside the sheet. The foaming agent secondarily acts as a plasticizer that lowers the melt viscosity of the raw material resin composition and lowers the temperature for achieving a plasticized state of the raw material resin composition.

Examples of the foaming agent include aliphatic hydrocarbons such as propane, butane, pentane, hexane, and heptane; alicyclic hydrocarbons such as cyclobutane, cyclopentane, and cyclohexane; halogenated hydrocarbons such as chlorodifluoromethane, difluoromethane, trifluoromethane, trichlorofluoromethane, dichloromethane, dichlorofluoromethane, dichlorodifluoromethane, chloromethane, chloroethane, dichlorotrifluoroethane, dichloropentafluoroethane, tetrafluoroethane, difluoroethane, pentafluoroethane, trifluoroethane, dichlorotetrafluoroethane, trichlorotrifluoroethane, tetrachlorodifluoroethane, and perfluorocyclobutane; inorganic gases such as carbon dioxide, nitrogen, and air; and water.

The content of the foaming agent included in the biodegradable resin composition in the molding step can be appropriately determined depending on the amount and the like of the biodegradable resin and the heavy calcium carbonate particles, and is preferably in the range of 0.04% or more and 5.00% by mass or less relative to the total mass of the biodegradable resin composition.

<Method for producing resin composition according to present invention>

The resin composition according to the present invention can be obtained by mixing and stirring the above-described components using known methods, if necessary.

The method and conditions for adding calcium oxide are not particularly limited as long as the calcium oxide can be blended so that the final concentration of calcium oxide in the resin composition is in an amount of 0.5% by mass or more and 3.5% by mass or less. The mixing order of the biodegradable resin, the heavy calcium carbonate particles, and calcium oxide is also not particularly limited.

From the viewpoint of ease of work, calcium oxide is preferably added after the heavy calcium carbonate particles are added to the biodegradable resin serving as a base resin in the resin composition according to the present invention. Usually, calcium oxide is stirred together with the biodegradable resin and the heavy calcium carbonate particles so that the concentration of calcium oxide in the resin composition becomes uniform.

The mixing of the biodegradable resin, the heavy calcium carbonate particles, and calcium oxide may be appropriately determined in accordance with the molding method (for example, extrusion molding, injection molding, and vacuum molding). For example, the biodegradable resin, the heavy calcium carbonate particles, and calcium oxide may be kneaded and melted before being charged into a molding machine from a hopper or the biodegradable resin, the heavy calcium carbonate particles, and calcium oxide may be kneaded, melted, and at the same time, molded using the molding machine in an integrated manner. In melting and kneading, the heavy calcium carbonate particles and calcium oxide are preferably uniformly dispersed in the biodegradable resin and, at the same time, the mixture is kneaded by applying high shear stress. For example, the mixture is preferably kneaded using a twin-screw kneader.

The form of the resin composition according to the present invention is not particularly limited and may be prepared as pellets or may be used as it is in the molding step without being prepared as pellets. From the viewpoint of

ease of processing and handling, the form of the resin composition according to the present invention is preferably pellets.
In the case where the resin molded product according to the present invention is in the form of pellets, the shape of the pellets is not particularly limited. For example, pellets having a shape of cylinder, sphere, and ellipsoid may be formed. A pelletizing operation for obtaining the pellets can be performed by procedures or apparatuses commonly used by those skilled in the art. For example, while the biodegradable resin is being melted using a twin-screw extruder or the like, the heavy calcium carbonate particles and other additives are charged and the resultant mixture is melted and kneaded, extruded into a strand shape, and cooled. Thereafter, the pellets are produced using a pelletizer. The thus produced pellets can be used for injection molding or the like after sufficiently drying to remove water.
The size of the pellets may be appropriately determined depending on the shape. For example, in the case of the spherical pellets, the diameter may be 1 mm or more and 10 mm or less. In the case of the ellipsoidal pellets, the pellets may have an elliptical shape with an aspect ratio of 0.1 or more and 1.0 or less and may have longitudinal and lateral lengths of 1 mm or more and 10 mm or less. In the case of cylindrical pellets, the diameter may be within a range of 1 mm or more and 10 mm or less and the length may be within a range of 1 mm or more and 10 mm or less. These shapes may be formed after the kneading step in accordance with usual methods.

<Resin molded product >

The resin molded product according to the present invention is a molded product molded in an arbitrary shape using the resin composition according to the present invention.
The shape or the like of the resin molded product according to the present invention is not particularly limited and may be in various forms. Various molded products, for example, films, sheets, container products for food and other container products, or consumable products disposed in a relatively short period of time in the fields of daily necessities, automotive parts, electric/electronic parts, construction members, and the like can be molded.
The thickness of the resin molded product according to the present invention is also not particularly limited and may vary from a thin thickness to a thick thickness depending on the form of the molded product. For example, the molded product having a thickness of 40 μm or more and 5,000 μm or less, and more preferably having a thickness of 50 μm or more and 1,000 μm or less is exemplified. The thickness within this range allows a molded product that has no problem of moldability and processability, does not cause thickness deviation, is uniform, and has no defect to be molded.
In particular, in the case where the form of the molded product is a printing sheet or a packaging sheet, the thickness is more preferably 50 μm or more and 1,000 μm or less and further preferably 50 μm or more and 400 μm or less. A sheet having a thickness within such a range can be suitably used in place of paper or synthetic paper for a general printing/information application and a packaging application.
In the case where the form of the molded product is a sheet for vacuum molding, the thickness is desirably more preferably 300 μm or more and 2,000 μm or less, and further preferably 500 μm or more and 1,000 μm or less. A sheet having a thickness within such a range allows a secondary molded product having sufficient mechanical strength, excellent surface properties, and the like to be obtained in excellent processability even by the subsequent vacuum molding.
Furthermore, in the case where the form of the molded product is a film formed by inflation molding, the thickness is desirably more preferably 10 μm or more and 200 μm or less, and further preferably 30 μm or more and 100 μm or less. When a film having a thickness within such a range is molded, a molded product having sufficient mechanical strength and flexibility and also having excellent surface properties and the like can be formed.
In one aspect of the resin molded product according to the present invention, a member constituting the molded product may be a product having a laminated structure (that is, a laminated product). The molded product molded from the resin composition according to the present invention has excellent mechanical strength, flexibility, heat resistance, biodegradability and the like. In order to provide various functionalities such as a non-migration property of the included components, scratch resistance, glossiness, and heat sealability to the surface, an aspect in which at least one surface of a layer made of the resin composition according to the present invention is covered with a surface layer may be employed in the laminated product. Preferable examples of such a surface layer include a surface layer made of the biodegradable resin (a surface layer including the biodegradable resin alone) .
In the case where both surfaces of the layer including the resin composition according to the present invention are covered, the surface layers arranged on the respective surfaces may be the same or different. Another intermediate layer or a plurality of intermediate layers may be provided between the surface layer and the layer including the resin composition according to the present invention. The material constituting such a surface layer is not particularly limited because various materials can be used depending on the function to be provided and the like. For example, an aspect of a biodegradable resin, in particular polylactic acid, having no additives or blending significantly low amounts of additives, or petroleum-based synthetic resins such as polyolefin resins, additive-free polypropylene film layers, and additive-free polyethylene film layers, can be exemplified. The thickness of these surface layers may be sufficiently thin as compared

with the thickness of the layer including the resin composition according to the present invention and, for example, about 1 μm or more and about 40 μm or less, and more preferably about 2 μm or more and about 15 μm or less.

A method for covering at least one surface of the layer including the resin composition according to the present invention with the surface layer is also not particularly limited. As the method, a method in which a separately prepared film for the surface layer molded by, for example, inflation molding adheres to one surface or both surfaces of the layer including the resin composition according to the present invention by laminating processing, or a method in which, as conventionally known methods, the biodegradable composition for the surface layer is coextruded using a two-color die or a multi-color die together with the resin composition according to the present invention to mold a laminated sheet may be employed.

<Method for producing resin molded product>

As the method for producing the resin molded product according to the present invention, usual methods can be used except that the resin composition according to the present invention (that is, the resin composition including the biodegradable resin and the heavy calcium carbonate particles in a mass ratio of 50:50 to 10:90 and including 0.5% by mass or more and 3.5% by mass or less of calcium oxide relative to the resin composition) as a molding target is used. After the resin composition according to the present invention is prepared, the resin molded product can be obtained by molding the resin composition with any methods.

In the method for producing the resin molded product according to the present invention, the water content of the resin composition at the time of starting the molding is 0.2% by mass or more (preferably, 0.2% by mass or more and 3.0% by mass or less).

In the present invention, the phrase "at the time of starting the molding step" means a time immediately before the resin composition according to the present invention or each of the materials constituting the resin composition according to the present invention is charged to a molding machine (preferably within 30 minutes before the resin composition or each of the materials is charged and more preferably within 10 minutes before charged).

As described above, in the present invention, the hydrolysis of the biodegradable resin at the time of molding is reduced due to the action of calcium oxide. Therefore, according to the present invention, the hydrolysis of the biodegradable resin at the time of molding can be reduced even when, for example, not only is the water content of the resin composition high at the time of starting the molding process, but also the molding process is in a high humidity environment.

In the present invention, the term "high humidity environment" means, for example, an environment having a relative humidity of 75% RH or more (preferably 75% RH or more and 98% RH or less) at 0°C or more and 50°C or less. For example, at the time immediately before the resin composition according to the present invention or each of the materials constituting the resin composition according to the present invention is charged into the molding machine, an environment that surrounds the resin composition or the materials may be the high humidity environment as described above.

As the method for obtaining the resin molded product from the resin composition, any molding methods may be employed. For example, any known molding methods such as an injection molding method, a foam injection molding method, an injection compression molding method, an extrusion molding method, a blow molding method, an inflation molding method, a press molding method, a calendar molding method, a vacuum molding method, an in-mold molding method, a gas press molding method, a two-color or multi-color molding method, and a sandwich molding method may be employed. In the case where the resin composition according to the present invention includes the foaming agent and a molded product in an aspect of a foamed product is obtained, conventionally known methods including liquid phase foaming method such as injection foaming, extrusion foaming, and blow forming, or solid phase foaming methods such as bead foaming, batch foaming, press foaming, and atmospheric secondary foaming may be employed as the method for molding the foamed product as long as the foamed molded product can be molded into a desired shape.

The molding temperature at the time of molding can be set depending on the kind of the resin because the molding method of the resin composition, the kind of the biodegradable resin, and the like vary. For example, molding is desirably performed at a melted and kneaded resin temperature in the temperature range of 140°C or more and 220°C or less and more preferably of 160°C or more and 200°C or less. In such a temperature range, the biodegradable resin can be molded with excellent shape following property without deterioration.

Usually, at the time of melting and kneading the biodegradable resin, the hydrolysis is promoted in the presence of water as the temperature rises. As a result, the resin molded product obtained from the resin composition tends to have variation or decrease in strength. According to the present invention, however, the hydrolysis is reduced even in the presence of water and the strength of the resin molded product is less likely to vary or decrease due to the action of calcium oxide.

As one preferable aspect of the method for producing the molded product according to the present invention, the method for producing the molded product in which the resin composition is melted and kneaded using a twin-screw

extruder at 140°C or more and 220°C or less and more preferably 160°C or more and 200°C or less, and thereafter molded into a sheet-like product (unstretched sheet-like product) with a T-die is exhibited.

As another preferable aspect of the method for producing the molded product according to the present invention, the method for producing the molded product in which the resin composition is melted and kneaded using a twin-screw extruder at 140°C or more and 220°C or less and more preferably 160°C or more and 200°C or less, and thereafter molded at a mold temperature of 20°C or more and 110°C or less is exhibited.

As described above, in the molding of the molded product according to the present invention, forming of a multilayer product with other resin composition is possible. Depending on the purpose, the other resin composition can be applied to one surface or both surfaces of the layer made of the resin composition according to the present invention, or conversely, the resin composition according to the present invention can be applied to one surface or both surfaces of the layer made of the other resin composition.

In the case of molding a sheet-like product or a film-like product, the product can be stretched in the uniaxial direction, the biaxial direction, or the multiaxial direction (stretching by, for example, a tubular method) at the time of or after the molding. In the present invention, however, an aspect of no stretching or unavoidable weak stretching so as to be substantially no stretching is preferable. In such a non-stretched or substantially non-stretched state, the molded product according to the present invention may have sufficient mechanical strength and, at the same time, may provide excellent biodegradability.

The crystalline polylactic acid (poly(L-lactic acid) or poly(D-lactic acid)) that can be representatively used as the biodegradable resin in the present invention has a relatively high glass transition temperature of 57°C or more and 60°C or less. As is clear from this, the main chain is significantly rigid and the crystallization rate is slow. Therefore, in the injection molding without the stretching operation, polylactic acid remains in a semi-melted state even when the mold temperature is set to 90°C or more and 100°C or less (high temperature mold), which is optimum for crystallization. Polylactic acid is cooled and solidified by setting the mold temperature near room temperature (low temperature mold). The degree of crystallinity, however, is extremely low and only a molded product having poor heat resistance is obtained.

On the other hand, in the resin composition according to the present invention, the heavy calcium carbonate particles are mixed in a large blended amount relative to the biodegradable resin, and thus the molded product is sufficiently hardened even in the high temperature mold and has higher crystallinity even in the low temperature mold even when the crystalline polylactic acid (poly(L-lactic acid) or poly(D-lactic acid)) as the biodegradable resin is used as the main component. The heat resistance becomes high as compared with the conventional composition in which the crystalline polylactic acid is used as the main component by the additional effect caused by the blend of the heavy calcium carbonate particles in a large blended amount. Therefore, it is not necessary to take a sufficient time for cooling, and thus the molding cycle is shortened and the productivity is improved.

Examples

Hereinafter, the present invention will be described more specifically with reference to Examples. These Examples are described only for the purpose of exemplifying specific aspects and embodiments in order to facilitate the understanding of the concept and scope of the present invention disclosed in this specification and described in the appended claims. The present invention is not limited to these Examples.

<Reference Test 1>

The usefulness of using the heavy calcium carbonate particles for improving the biodegradability of products including the biodegradable resin was confirmed by the following method.

In Reference Test 1, the following components were used as materials.

(Resin component (P))

P1-1: Poly(L-lactic acid) (weight average molecular weight Mw: 130,000, melting point: 172°C)
P1-2: Poly(L-lactic acid) (weight average molecular weight Mw: 170,000, melting point: 178°C)
P1-3: Poly(L-lactic acid) (weight average molecular weight Mw: 80,000, melting point: 167°C)
P1-4: Poly(D-lactic acid) (weight average molecular weight Mw: 230,000, melting point: 182°C)
P1-5: Poly(DL-lactic acid) (weight average molecular weight Mw: 150,000)
P1-6: Polylactic acid multi-block copolymer (weight average molecular weight Mw: 70,000, melting point: 140°C)
P1-7: Polyglycolic acid (weight average molecular weight Mw: 200,000, melting point: 228°C)

(Inorganic substance powder (I))

I1-1: Heavy calcium carbonate particles, Average particle diameter: 2.2 μm, BET specific surface area: 1.0 $m^2/g$, roundness: 0.85

11-2: Heavy calcium carbonate particles, Average particle diameter: 1.1 μm, BET specific surface area: 3.2 $m^2/g$, roundness: 0.55

I1-3: Heavy calcium carbonate particles, Average particle diameter: 3.6 μm, BET specific surface area: 0.6 $m^2/g$, roundness: 0.9

I1-4: Heavy calcium carbonate particles, Average particle diameter: 8.0 μm, BET specific surface area: 0.3 $m^2/g$, roundness: 0.93

I1-a: Light calcium carbonate particles, Average particle diameter: 1.5 μm, BET specific surface area: 0.1 $m^2/g$, Roundness: 1.0

I1-b: Talc particles, Average particle diameter: 3.3 μm, BET specific surface area: 12.0 $m^2/g$, roundness: 0.49

(Plasticizer (M))

Branched polylactic acid

<Example 1-1>

Poly(L-lactic acid) P1-1 serving as the resin component, Heavy calcium carbonate particles I1-1 serving as the inorganic substance powder, and Branched polylactic acid M serving as a plasticizer were used in blend proportions listed in Table 1. In Table 1, the numerical values of each component are the values in part by mass. Each component was charged into an extrusion molding machine equipped with a twin-screw (T-die extrusion molding apparatus manufactured by Toyo Seiki Seisakusho (screw diameter 20 mm, L/D = 25)) and the resultant mixture was kneaded at a temperature of 175°C and pelletized. The obtained pellets were injection molded at 175°C and retained at a mold temperature of 60°C to give a container-shaped molded product. As a result, mold releasability was excellent. A sheet having a thickness of 3 mm and a film having a thickness of 200 μm were prepared by using the obtained pellets and passing through a T-die at 180°C. The Izod impact test, the enzymatic degradability test, and the seawater degradability test were performed using test specimens prepared from the obtained sheet and film. The obtained results are listed in Table 1.

<Examples 1-2 to 1-12 and Comparative Examples 1-1 to 1-4>

Sheets having a thickness of 3 mm and films having a thickness of 200 μm were prepared in the same manner as the manner in Example 1-1 except that the kinds and amounts of each component in the resin composition were changed as listed in Table 1 below. Similarly, the Izod impact test, the enzymatic degradability test, and the seawater degradability test were performed. The obtained results are listed in Table 1.

<Evaluation methods>

Each physical property value described in the following Examples and Comparative Examples was evaluated by the following methods.

(Specific surface area of particles)

The BET specific surface area was determined by a nitrogen gas adsorption method using BELSORP-mini manufactured by MicrotracBEL Corp.

(Average particle diameter of particle)

The average particle diameter was calculated from the measurement result of a specific surface area by an air permeation method in conformity with JIS M-8511 using a specific surface area measuring apparatus Type SS-100 manufactured by Shimadzu Corporation.

(Roundness of particles)

So as to represent the particle distribution of powder, 100 particles were sampled. The particle image of the projection image of each of these particles obtained using an optical micrometer was subjected to image analysis using a commercially available image analysis software to determine the roundness. As a measurement principle, the projected area of the particle and the projected perimeter of the particle are measured and designated as (A) and (PM), respectively. When the radius of a circle having the same perimeter as the projected perimeter of the particle is designated as (r),

$$PM = 2\pi r \quad (1).$$

When the area of the circle having the same perimeter as the projected perimeter of the particle is designated as (B),

$$B = \pi r^2 \quad (2).$$

Transforming Formula (1) results in $r = PM/2\pi$ (3).

Therefore, substituting Formula (3) into Formula (2) results in

$$B = \pi \times (PM/2\pi)^2 \quad (4).$$

Therefore, the roundness is determined as Roundness = $A/B = A \times 4\pi/(PM)^2$ .

(Weight average molecular weight (Mw))

The weight average molecular weight was determined in terms of a standard polystyrene value measured by gel permeation chromatography (GPC). The following measuring instrument was used: Detector: Differential refractometer RID-6A manufactured by Shimadzu Corporation, Pump: LC-10AT manufactured by Shimadzu Corporation, and Column: Serially connected TSKgel G2000HXL, TSKgel G3000HXL, and TSKguardcolumn HXL-L manufactured by TOSOH CORPORATION. Chloroform was used as an eluent, and 10 μl of a sample having a temperature of 40°C, a flow rate of 1.0 ml/min, and a concentration of 1 mg/ml was injected.

(Izod impact strength)

The Izod impact test was performed in accordance with ASTM D256 using a test specimen having a width of 10 mm and a thickness of 3 mm under conditions at room temperature (23°C ± 1°C) with a notch.

(Enzymatic degradability test)

Preparation of CLE enzyme solution and decomposition liquid;
To 10 ml of a 60 mmol/l phosphate buffer solution of pH 7, 48 μl of a CLE enzyme solution (lipase originated from Cryptococcus sp. S-2 with a lipase activity of 653 U/ml (National Research Institute of Brewing (Incorporated Administrative Agency): Japanese Patent Application Laid-open No. 2004-73123)) was added to prepare a decomposition liquid. The lipase activity was measured using para-nitrophenyl laurate as a substrate. Here, 1 U of lipase activity is defined as the amount of enzyme when 1 μmol/min of para-nitrophenol is liberated from para-nitrophenyl laurate.

Enzymatic degradability test;

The film (30 mm × 30 mm) prepared in each Example and Comparative Example and 10 ml of the above-described decomposition liquid were placed in a 25-ml vial and the vail was shaken at 58°C and 100 rpm for 7 days. In order to avoid an extreme decrease in pH, 7 days were divided into 2 days, 2 days, and 3 days, and the decomposition liquid was exchanged at each of the divided days. After 7 days, the film was taken out and dried overnight in an oven at 45°C, and the weight was measured. The decomposition rate of the film was determined by {(Initial film weight) - (Film weight after 7 days)/Initial film weight} × 100.

(Seawater degradability test)

Preparation of artificial seawater;

Into 1 L of tap water, 36 g of dry artificial seawater (manufactured by GEX. Co., Ltd.) was dissolved to prepare artificial seawater.

Seawater degradability test;

The film (30 mm × 30 mm) produced in each Example and Comparative Example and 10 ml of the artificial seawater were placed in a 25-ml vial and the vial was shaken at 58°C and 100 rpm for 7 days. After 7 days, the film was taken out and dried overnight in an oven at 45°C, and the weight was measured. The decomposition rate of the film was determined by {(Initial film weight) - (Film weight after 7 days)/Initial film weight} × 100.

(Tensile modulus and elongation)

The tensile test of the sheet was performed using Strograph manufactured by Toyo Seiki Seisaku-sho, Ltd. at a temperature of 23°C. As the shape of the test specimen, the dumbbell-shaped No. 3 test specimen in accordance with JIS K6251:2017 was used. The stretching speed was 200 mm/minute. The tensile modulus and elongation were measured from the obtained stress-strain curve.

(Biodegradability)

The film or sheet (30 mm × 30 mm) prepared in each of Examples and Comparative Examples was placed in a 25 ml vial together with 10 ml of seawater reserved at room temperature (25°C ± 5°C) and left for one month. Thereafter, the state of the film or sheet was visually observed and evaluated according to the following evaluation criteria.

◦: The film or sheet is decomposed.
Δ: The film or sheet is partially decomposed.
×: No change is observed in the film or sheet.

[Table 1]

| | Resin component (P) | Inorganic substance powder (I) | Plasticizer (M) | Izod impact test (kJ/m$^2$) | Enzymatic degradability test (%) | Seawater degradability test (%) |
|---|---|---|---|---|---|---|
| Example 1-1 | P1-1/40 | I1-1/60 | 1 | 5.3 | 78 | 63 |
| Example 1-2 | P1-1/20 | I1-1/80 | 1 | 5.4 | 80 | 65 |
| Example 1-3 | P1-1/10 | 11-1/90 | 1 | 4.5 | 81 | 67 |
| Example 1-4 | P1-2/30 | I1-1/70 | 1 | 5.3 | 77 | 61 |
| Example 1-5 | P1-3/30 | I1-1/70 | 1 | 4.7 | 76 | 60 |
| Example 1-6 | P1-4/30 | I1-1/70 | 1 | 4.9 | 73 | 58 |
| Example 1-7 | P1-5/30 | I1-1/70 | 1 | 4.8 | 70 | 57 |
| Example 1-8 | P1-6/30 | I1-1/70 | 1 | 4.5 | 74 | 59 |
| Example 1-9 | P1-1/30 | I1-2/70 | 1 | 5.3 | 76 | 61 |
| Example 1-10 | P1-1/30 | I1-3/70 | 1 | 5.0 | 72 | 57 |
| Example 1-11 | P1-1/30 | I1-4/70 | 1 | 4.8 | 70 | 55 |
| Example 1-12 | P1-1/28<br>P1-7/ 2 | I1-1/70 | 1 | 5.5 | 75 | 60 |

(continued)

| | Resin component (P) | Inorganic substance powder (I) | Plasticizer (M) | Izod impact test (kJ/m$^2$) | Enzymatic degradability test (%) | Seawater degradability test (%) |
|---|---|---|---|---|---|---|
| Comparative Example 1-1 | P1-1/ 5 | I1-1/95 | 1 | 2.5 | 79 | 65 |
| Comparative Example 1-2 | P1-1/60 | I1-1/40 | 1 | 5.1 | 40 | 25 |
| Comparative Example 1-3 | P1-1/40 | I1-a/60 | 1 | 5.4 | 35 | 18 |
| Comparative Example 1-4 | P1-1/20 | I1-b/80 | 1 | 5.4 | 36 | 19 |

It has been found that, in Examples 1-1 to 1-12 of the thermoplastic resin compositions in which the heavy calcium carbonate particles are blended, all Examples provided the molded products having excellent moldability and excellent strength. In addition, with respect to the biodegradability, it is clear that the molded products of Examples are improved as compared with the molded products of Comparative Examples 1-2, 1-3 and 1-4.

<Reference Test 2>

The usefulness of using the heavy calcium carbonate particles for using the multicomponent hydroxyalkanoic acid copolymer (P(LA-co-3HB)) as the biodegradable resin and for improving the biodegradability of products including the biodegradable resin was confirmed by the following method.

In Reference Test 2, the following components were used as materials.

(Resin component (P))

P2-1: P(LA-co-3HB) (lactic acid fraction 80% by mole)
P2-2: P(LA-co-3HB) (lactic acid fraction 70% by mole)
P2-3: P(LA-co-3HB) (lactic acid fraction 50% by mole)
P2-4: P(LA-co-3HB) (lactic acid fraction 30% by mole)
P2-5: P(LA-co-3HB) (lactic acid fraction 20% by mole)
P2-a: Poly(L-lactic acid)
P2-b: Poly(3-hydroxybutyric acid)

(Calcium carbonate (I))

12-1: Heavy calcium carbonate particles, Average particle diameter: 2.2 μm, BET Specific surface area: 1.0 m$^2$/g, Roundness: 0.85
12-2: Heavy calcium carbonate particles, Average particle diameter: 1.1 μm, BET Specific surface area: 3.2 m$^2$/g, Roundness: 0.55
I2-3: Heavy calcium carbonate particles, Average particle diameter: 3.6 μm, BET Specific surface area: 0.6 m$^2$/g, Roundness: 0.90
I2-a: Light calcium carbonate particles, Average particle diameter: 1.5 μm, BET Specific surface area: 0.1 m$^2$/g, Roundness: 1.00

<Comparative Examples 2-1 to 2-7>

Respective Resins P2-1 to P2-5, P2-a, and P2-b, which had different lactic acid fractions in the resins, were used to prepare films having a thickness of 30 μm in an inflation film extrusion line (60 mm of circular die, 1.2 mm of die

gap, 30 mm of screw diameter, L/D ratio = 30). The film was treated with a BUR (Blow-Up Ratio) of 2.5. In the extruder, the temperature in each section was set to 160°C to 180°C and the rotation speed was maintained at 20 rpm.

Table 2 lists the evaluation results of the tensile modulus, elongation, and biodegradability of the obtained films.

As listed in Table 2, P(LA-co-3HB) having the lactic acid fraction in the range of 20% to 80% provided sufficient flexibility and exhibited excellent elongation in practical use. In Comparative Example 2-1, however, the elongation was low and the film was brittle. In addition, all of the films had insufficient biodegradability.

<Examples 2-1 to 2-9>

Respective Resins P2-3, P2-4, and P2-5, which had different lactic acid fractions in the resin, were used and Calcium carbonate (I) was added to the resin as listed in Table 2. Similarly to Comparative Examples 2-1 to 2-7 above, the resultant compositions were used to prepare films having a thickness of 30 μm in the inflation film extrusion line (60 mm of circular die, 1.2 mm of die gap, 30 mm of screw diameter, L/D ratio = 30). The film was treated with a BUR (Blow-Up Ratio) of 3.0. In the extruder, the temperature in each section was set to 160°C to 180°C and the rotation speed was maintained at 20 rpm.

Table 2 lists the evaluation results of the tensile modulus, elongation, and biodegradability of the obtained films.

As listed in Table 2, any of the films according to Examples 2-1 to 2-9 provided sufficient flexibility and exhibited excellent elongation in practical use, and the biodegradability was also sufficient.

<Examples 2-10 and 2-11 and Comparative Example 2-8>

Films having a thickness of 30 μm were prepared by the inflation method in the same manner as the manner in Example 2-1 except that calcium carbonate (I) was replaced with 12-2, 12-3, and I2-a.

Table 2 lists the evaluation results of the tensile modulus, elongation, and biodegradability of the obtained films.

As listed in Table 2, both of the films according to Examples 2-10 and 2-11 provided excellent results in flexibility and biodegradability. In contrast, Comparative Example 2-8, in which light calcium carbonate particles were blended as Calcium carbonate (I), provided remarkably inferior moldability and thus a uniform film was difficult to prepare.

[Table 2]

| | Resin component | Resin composition | | Calcium carbonate | Blended amount of calcium carbonate (% by mass) | Tensile modulus (MPa) | Elongation (%) | Biodegradability |
|---|---|---|---|---|---|---|---|---|
| | | Lactic acid (% by mole) | 3-Hydroxy butyric acid (% by mole) | | | | | |
| Comparative Example 2-1 | P2-a | 100 | 0 | - | 0 | 3,600 | 20 | × |
| Comparative Example 2-2 | P2-1 | 80 | 20 | - | 0 | 3,300 | 100 | × |
| Comparative Example 2-3 | P2-2 | 70 | 30 | - | 0 | 2,800 | 120 | × |
| Comparative Example 2-4 | P2-3 | 50 | 50 | - | 0 | 2,500 | 150 | × |
| Comparative Example 2-5 | P2-4 | 30 | 70 | - | 0 | 2,200 | 200 | × |
| Comparative Example 2-6 | P2-5 | 20 | 80 | - | 0 | 1,900 | 250 | Δ |
| Comparative Example 2-7 | P2-b | 0 | 100 | - | 0 | 1,500 | 300 | Δ |
| Example 2-1 | P2-3 | 50 | 50 | 12-1 | 50 | 2,600 | 145 | ∘ |
| Example 2-2 | P2-3 | 50 | 50 | 12-1 | 55 | 2,700 | 140 | ∘ |
| Example 2-3 | P2-3 | 50 | 50 | 12-1 | 60 | 2,800 | 140 | ∘ |
| Example 2-4 | P2-4 | 30 | 70 | 12-1 | 50 | 2,400 | 190 | ∘ |
| Example 2-5 | P2-4 | 30 | 70 | 12-1 | 55 | 2,500 | 180 | ∘ |
| Example 2-6 | P2-4 | 30 | 70 | 12-1 | 60 | 2,600 | 180 | ∘ |
| Example 2-7 | P2-5 | 20 | 80 | 12-1 | 50 | 2,000 | 240 | ∘ |
| Example 2-8 | P2-5 | 20 | 80 | 12-1 | 55 | 2,100 | 230 | ∘ |
| Example 2-9 | P2-5 | 20 | 80 | 12-1 | 60 | 2,200 | 230 | ∘ |
| Example 2-10 | P2-3 | 50 | 50 | 12-2 | 50 | 2,700 | 145 | ∘ |
| Example 2-11 | P2-3 | 50 | 50 | 12-3 | 50 | 2,700 | 140 | ∘ |

(continued)

| | Resin component | Resin composition | | Calcium carbonate | Blended amount of calcium carbonate (% by mass) | Tensile modulus (MPa) | Elongation (%) | Biodegradability |
|---|---|---|---|---|---|---|---|---|
| | | Lactic acid (% by mole) | 3-Hydroxy butyric acid (% by mole) | | | | | |
| Comparative Example 2-8 | P2-3 | 50 | 50 | I2-a | 50 | Impossible to prepare film | | |

<Comparative Example 2-9 to 2-15>

Respective Resins P2-1 to P2-5, P2-a, and P2-b, which had different lactic acid fractions in the resins, were used and molded into sheets having a thickness of 500 μm through a T die at 180°C using a twin-screw extruder. Thereafter, the obtained sheets were further vacuum-molded into shallow dish-shaped container products at a heat plate temperature of 350°C.

Table 3 lists the evaluation results of the tensile modulus, elongation, and biodegradability of the obtained molded products.

As listed in Table 3, any of the molded products had insufficient biodegradability.

<Example 2-12 to 2-20 and Comparative Example 2-16 to 2-18>

Respective Resins P2-1, P2-2, P2-3, and P2-a, which had different lactic acid fractions in the resins, were used and Heavy calcium carbonate particles 12-1 as Calcium carbonate (I) was added to the resins as listed in Table 3. Similarly to Comparative Examples 2-9 to 2-15 above, the resultant compositions were used for being molded into sheets having a thickness of 500 μm through a T die at 180°C using a twin-screw extruder. Thereafter, the obtained sheets were further vacuum-molded into shallow dish-shaped container products at a heat plate temperature of 350°C.

Table 3 lists the evaluation results of the tensile modulus, elongation, and biodegradability of the obtained molded products.

As listed in Table 3, any of the molded products according to Examples 2-12 to 2-20 provided sufficient flexibility and exhibited excellent elongation in practical use, and the biodegradability was also sufficient.

[Table 3]

| | Resin component | Resin composition | | Calcium carbonat e | Blended amount of calcium carbonate (% by mass) | Tensile modulus (MPa) | Elongation (%) | Biodegradability |
|---|---|---|---|---|---|---|---|---|
| | | Lactic acid (% by mole) | 3-Hydroxy butyric acid (% by mole) | | | | | |
| Comparative Example 2-9 | P2-a | 100 | 0 | - | 0 | 3,600 | 20 | × |
| Comparative Example 2-10 | P2-1 | 80 | 20 | - | 0 | 3,300 | 100 | × |
| Comparative Example 2-11 | P2-2 | 70 | 30 | - | 0 | 2,800 | 120 | × |
| Comparative Example 2-12 | P2-3 | 50 | 50 | - | 0 | 2,500 | 150 | × |
| Comparative Example 2-13 | P2-4 | 30 | 70 | - | 0 | 2,200 | 200 | × |
| Comparative Example 2-14 | P2-5 | 20 | 80 | - | 0 | 1,900 | 250 | Δ |
| Comparative Example 2-15 | P2-b | 0 | 100 | - | 0 | 1,500 | 300 | Δ |
| Comparative Example 2-16 | P2-a | 100 | 0 | 12-1 | 20 | 3,700 | 20 | × |
| Comparative Example 2-17 | P2-a | 100 | 0 | 12-1 | 30 | 3,800 | 15 | Δ |
| Comparative Example 2-18 | P2-a | 100 | 0 | 12-1 | 40 | 3,900 | 10 | Δ |
| Example 2-12 | P2-1 | 80 | 20 | 12-1 | 30 | 3,400 | 100 | ◦ |
| Example 2-13 | P2-1 | 80 | 20 | 12-1 | 40 | 3,500 | 100 | ◦ |
| Example 2-14 | P2-1 | 80 | 20 | 12-1 | 60 | 3,600 | 100 | ◦ |
| Example 2-15 | P2-2 | 70 | 30 | 12-1 | 30 | 2,900 | 110 | ◦ |
| Example 2-16 | P2-2 | 70 | 30 | 12-1 | 40 | 3,000 | 110 | ◦ |
| Example 2-17 | P2-2 | 70 | 30 | 12-1 | 60 | 3,100 | 100 | ◦ |
| Example 2-18 | P2-3 | 50 | 50 | 12-1 | 30 | 2,600 | 140 | ◦ |

(continued)

| | Resin component | Resin composition | | Calcium carbonat e | Blended amount of calcium carbonate (% by mass) | Tensile modulus (MPa) | Elongation (%) | Biodegradability |
|---|---|---|---|---|---|---|---|---|
| | | Lactic acid (% by mole) | 3-Hydroxy butyric acid (% by mole) | | | | | |
| Example 2-19 | P2-3 | 50 | 50 | 12-1 | 40 | 2,700 | 140 | ◦ |
| Example 2-20 | P2-3 | 50 | 50 | 12-1 | 60 | 2,800 | 130 | ◦ |

It has been found that, in Examples of the thermoplastic resin compositions in which the heavy calcium carbonate particles are blended, all Examples provided the molded products having excellent moldability and excellent strength, even when the multicomponent hydroxyalkanoic acid copolymer was used as the biodegradable resin.

<Test 1>

Based on the method described in Reference Test 1, a resin composition (pellets) in which a predetermined amount of calcium oxide was further blended was prepared and various evaluations were performed. A test using silica gel, which is known to have a dehydration action similar to calcium oxide, in place of calcium oxide was also performed.
In Table 4, the numerical values listed in the items of "Resin component (P)" and "Inorganic substance powder (I)" mean the mass ratio of the resin component and the inorganic substance powder. For example, "P1-1/40" and "I1-1/60" mean that Resin component P1-1:Inorganic substance powder I1-1 = 40:60 in a mass ratio was used.
In Test 1, the following components were used as materials.

(Resin component (P))

P1-1: Poly(L-lactic acid) (weight average molecular weight Mw: 130,000, melting point: 172°C.)
P1-2: Poly(L-lactic acid) (weight average molecular weight Mw: 170,000, melting point: 178°C.)
P1-3: Poly(L-lactic acid) (weight average molecular weight Mw: 80,000, melting point: 167°C)
P1-4: Poly(D-lactic acid) (weight average molecular weight Mw: 230,000, melting point: 182°C.)
P1-5: Poly(DL-lactic acid) (weight average molecular weight Mw: 150,000)
P1-6: Polylactic acid multi-block copolymer (weight average molecular weight Mw: 70,000, melting point: 140°C.)

(Inorganic substance powder (I))

I1-1: Heavy calcium carbonate particles, Average particle diameter: 2.2 μm, BET specific surface area: 1.0 $m^2/g$, roundness: 0.85
I1-a: Light calcium carbonate particles, Average particle diameter: 1.5 μm, BET specific surface area: 0.1 $m^2/g$, Roundness: 1.0

(Dehydrating agent (D))

D1: Calcium oxide
D2: Silica gel

(Water content (W))

After mixing each component, the water content in the resin composition was adjusted in accordance with JIS K0113: 2005 "General rules for methods of potentiometric, amperometric, coulometric, and Karl Fischer titrations".

(Example and Comparative Example)

Test specimens prepared from a resin molded product (sheet and film) including the components listed in Table 4 were prepared by the same manner as the manner in Reference Test 1. Using these test specimens, each physical property value was measured in the same manner as the manner in Reference Test 1. The results are listed in Table 4.

[Table 4]

| | Resin component (P) | Inorganic substance powder (I) | Total amount of (P) and (I) (% by mass) | Dehydrating agent (D) | Dehydrating agent content (% by mass) | Water content (% by mass) | Izod impact test (kJ/m$^2$) | Enzymatic degradability test (%) | Seawater degradability test (%) |
|---|---|---|---|---|---|---|---|---|---|
| Example 3-1 | P1-1/40 | I1-1/60 | 98.9 | D1 | 0.6 | 0.5 | 5.4 | 78 | 63 |
| Example 3-2 | P1-1/20 | 11-1/80 | 98.9 | D1 | 0.6 | 0.5 | 5.5 | 80 | 65 |
| Example 3-3 | P1-1/10 | 11-1/90 | 98.9 | D1 | 0.6 | 0.5 | 4.6 | 81 | 67 |
| Example 3-4 | P1-1/40 | I1-1/60 | 96.5 | D1 | 3.0 | 0.5 | 5.2 | 78 | 63 |
| Example 3-5 | P1-1/20 | 11-1/80 | 96.5 | D1 | 3.0 | 0.5 | 5.3 | 80 | 65 |
| Example 3-6 | P1-1/10 | 11-1/90 | 96.5 | D1 | 3.0 | 0.5 | 4.4 | 81 | 67 |
| Comparative Example 3-1 | P1-1/40 | I1-1/60 | 98.9 | D2 | 0.6 | 0.5 | 3.6 | 78 | 62 |
| Comparative Example 3-2 | P1-1/20 | 11-1/80 | 98.9 | D2 | 0.6 | 0.5 | 3.6 | 80 | 64 |
| Comparative Example 3-3 | P1-1/10 | 11-1/90 | 98.9 | D2 | 0.6 | 0.5 | 3.4 | 81 | 67 |
| Comparative Example 3-4 | P1-1/40 | I1-1/60 | 96.5 | D2 | 3.0 | 0.5 | 3.6 | 78 | 63 |
| Comparative Example 3-5 | P1-1/20 | 11-1/80 | 96.5 | D2 | 3.0 | 0.5 | 3.6 | 80 | 65 |
| Comparative Example 3-6 | P1-1/10 | 11-1/90 | 96.5 | D2 | 3.0 | 0.5 | 3.4 | 81 | 66 |
| Comparative Example 3-7 | P1-1/40 | I1-1/60 | 99.5 | None | 0 | 0.5 | 3.9 | 78 | 63 |
| Comparative Example 3-8 | P1-1/40 | I1-a/60 | 98.9 | D1 | 0.6 | 0.5 | 3.9 | 78 | 62 |
| Comparative Example 3-9 | P1-1/60 | I1-1/40 | 98.9 | D1 | 0.6 | 0.5 | 3.9 | 69 | 50 |
| Comparative Example 3-10 | P1-1/40 | I1-1/60 | 99.3 | D1 | 0.2 | 0.5 | 3.9 | 78 | 63 |

(continued)

| | Resin component (P) | Inorganic substance powder (I) | Total amount of (P) and (I) (% by mass) | Dehydrating agent (D) | Dehydrating agent content (% by mass) | Water content (% by mass) | Izod impact test ($kJ/m^2$) | Enzymatic degradability test (%) | Seawater degradability test (%) |
|---|---|---|---|---|---|---|---|---|---|
| Comparative Example 3-11 | P1-1/40 | I1-1/60 | 95.5 | D1 | 4.0 | 0.5 | 3.8 | 78 | 62 |

As listed in Table 4, it has been found that the resin molded products obtained from the resin composition according to the present invention have high numerical values in the Izod impact test and excellent strength of the resin molded product. It has been presumed that this is because the hydrolysis of the biodegradable resin was reduced at the time of molding.

The resin molded product obtained from the resin composition according to the present invention had excellent results in both degradability tests and the biodegradability was not impaired.

The above-described effects were not observed in the resin molded products obtained from the resin composition that did not satisfy the requirements of the resin composition according to the present invention.

In particular, use of silica gel, which is known to have a dehydration action similar to calcium oxide, resulted in inferior strength of the resin molded product and thus the hydrolysis of the biodegradable resin was not reduced at the time of molding.

Although the data are not listed, the same results as the case where P1-1 was used were obtained when P1-2 to P1-6 were used in place of P1-1 as the resin.

<Test 2>

Based on the method described in Reference Test 2, a resin compositions (pellets) in which a predetermined amount of calcium oxide was further blended were prepared and various evaluations were performed. A test using silica gel, which is known to have a dehydration action similar to calcium oxide, in place of calcium oxide was also performed.

In Tables 5 and 6, the numerical values listed in the items of "Resin component (P)" and "Inorganic substance powder (I)" mean the mass ratio of the resin component and the inorganic substance powder. For example, "P2-3/50" and "12-1/50" mean that Resin component P2-3:Inorganic substance powder 12-1 = 50:50 was used in a mass ratio.

In Test 2, the following components were used as materials.

(Resin component (P))

P2-1: P (LA-co-3HB) (lactic acid fraction 80 mol%)
P2-2: P (LA-co-3HB) (lactic acid fraction 70 mol%)
P2-3: P (LA-co-3HB) (lactic acid fraction 50 mol%)
P2-4: P (LA-co-3HB) (lactic acid fraction 30 mol%)
P2-5: P (LA-co-3HB) (lactic acid fraction 20 mol%)
P2-a: Poly(L-lactic acid)
P2-b: Poly 3-hydroxybutyric acid

(Calcium carbonate (I))

12-1: Heavy calcium carbonate particles, Average particle diameter: 2.2 μm, BET specific surface area: 1.0 $m^2/g$, roundness: 0.85

I2-a: Light calcium carbonate particles, Average particle diameter: 1.5 μm, BET specific surface area: 0.1 $m^2/g$, Roundness: 1.00

(Dehydrating agent (D))

D1: Calcium oxide
D2: Silica gel

(Example and Comparative Example)

Resin molded products (films or shallow dish-shaped container products) including the components listed in Tables 5 and 6 were prepared by the same manner as the manner in Reference Test 2 depending on the presence or absence of calcium carbonate. Using these molded products, each physical property value was measured in the same manner as the manner in Reference Test 2. The results are listed in Table 5 (results of molding films as resin molded products) and Table 6 (results of molding shallow dish-shaped container products as resin molded products).

[Table 5]

| | Resin component (P) | Resin composition | | Calcium carbonat e (I) | Total amount of (P) and (I) (% by mass) | Dehydrat ing agent (D) | Dehydrat ing agent content (% by mass) | Water content (% by mass) | Tensile modulus (MPa) | Elongati on (%) | Biodegra dability |
|---|---|---|---|---|---|---|---|---|---|---|---|
| | | Lactic acid (% by mole) | 3-Hydroxy butyric acid (% by mole) | | | | | | | | |
| Example 4-1 | P2-3/50 | 50 | 50 | 12-1/50 | 98.9 | D1 | 0.6 | 0.5 | 2,900 | 160 | ◦ |
| Example 4-2 | P2-3/40 | 50 | 50 | 12-1/60 | 98.9 | D1 | 0.6 | 0.5 | 3,000 | 150 | ◦ |
| Example 4-3 | P2-3/30 | 50 | 50 | 12-1/70 | 98.9 | D1 | 0.6 | 0.5 | 3,100 | 140 | ◦ |
| Example 4-4 | P2-3/50 | 50 | 50 | 12-1/50 | 96.5 | D1 | 3.0 | 0.5 | 3,000 | 160 | ◦ |
| Example 4-5 | P2-3/40 | 50 | 50 | 12-1/60 | 96.5 | D1 | 3.0 | 0.5 | 3,100 | 150 | ◦ |
| Example 4-6 | P2-3/30 | 50 | 50 | 12-1/70 | 96.5 | D1 | 3.0 | 0.5 | 3,200 | 140 | ◦ |
| Comparative Example 4-1 | P2-3/50 | 50 | 50 | 12-1/50 | 98.9 | D2 | 0.6 | 0.5 | 2,400 | 130 | ◦ |
| Comparative Example 4-2 | P2-3/40 | 50 | 50 | 12-1/60 | 98.9 | D2 | 0.6 | 0.5 | 2,500 | 120 | ◦ |
| Comparative Example 4-3 | P2-3/30 | 50 | 50 | 12-1/70 | 98.9 | D2 | 0.6 | 0.5 | 2,600 | 110 | ◦ |
| Comparative Example 4-4 | P2-3/50 | 50 | 50 | 12-1/50 | 96.5 | D2 | 3.0 | 0.5 | 2,400 | 130 | ◦ |
| Comparative Example 4-5 | P2-3/40 | 50 | 50 | 12-1/60 | 96.5 | D2 | 3.0 | 0.5 | 2,500 | 120 | ◦ |
| Comparative Example 4-6 | P2-3/30 | 50 | 50 | 12-1/70 | 96.5 | D2 | 3.0 | 0.5 | 2,600 | 110 | ◦ |
| Comparative Example 4-7 | P2-3/40 | 50 | 50 | 12-1/60 | 99.5 | None | 0 | 0.5 | 2,500 | 120 | ◦ |
| Comparative Example 4-8 | P2-3/40 | 50 | 50 | I2-a/60 | 98.9 | D1 | 0.6 | 0.5 | 2,600 | 130 | × |
| Comparative Example 4-9 | P2-3/100 | 50 | 50 | I2-1/ 0 | 98.9 | D1 | 0.6 | 0.5 | 2,600 | 130 | × |

(continued)

| | Resin component (P) | Resin composition | | Calcium carbonate (I) | Total amount of (P) and (I) (% by mass) | Dehydrating agent (D) | Dehydrating agent content (% by mass) | Water content (% by mass) | Tensile modulus (MPa) | Elongation (%) | Biodegradability |
|---|---|---|---|---|---|---|---|---|---|---|---|
| | | Lactic acid (% by mole) | 3-Hydroxy butyric acid (% by mole) | | | | | | | | |
| Comparative Example 4-10 | P2-3/40 | 50 | 50 | 12-1/60 | 99.3 | D1 | 0.2 | 0.5 | 2,500 | 120 | ◦ |
| Comparative Example 4-11 | P2-3/40 | 50 | 50 | 12-1/60 | 95.5 | D1 | 4.0 | 0.5 | 2,600 | 130 | ◦ |

[Table 6]

| | Resin component (P) | Resin composition | | Calcium carbonate (I) | Total amount of (P) and (I) (% by mass) | Dehydrating agent (D) | Dehydrating agent content (% by mass) | Water content (% by mass) | Tensile modulus (MPa) | Elongation (%) | Biodegradability |
|---|---|---|---|---|---|---|---|---|---|---|---|
| | | Lactic acid (% by mole) | 3-Hydroxy butyric acid (% by mole) | | | | | | | | |
| Example 5-1 | P2-3/50 | 50 | 50 | 12-1/50 | 98.9 | D1 | 0.6 | 0.5 | 3,000 | 160 | ◦ |
| Example 5-2 | P2-3/40 | 50 | 50 | 12-1/60 | 98.9 | D1 | 0.6 | 0.5 | 3,100 | 150 | ◦ |
| Example 5-3 | P2-3/30 | 50 | 50 | 12-1/70 | 98.9 | D1 | 0.6 | 0.5 | 3,200 | 140 | ◦ |
| Example 5-4 | P2-3/50 | 50 | 50 | 12-1/50 | 96.5 | D1 | 3.0 | 0.5 | 3,100 | 160 | ◦ |
| Example 5-5 | P2-3/40 | 50 | 50 | 12-1/60 | 96.5 | D1 | 3.0 | 0.5 | 3,200 | 150 | ◦ |
| Example 5-6 | P2-3/30 | 50 | 50 | 12-1/70 | 96.5 | D1 | 3.0 | 0.5 | 3,300 | 140 | ◦ |
| Comparative Example 5-1 | P2-3/50 | 50 | 50 | 12-1/50 | 98.9 | D2 | 0.6 | 0.5 | 2,500 | 130 | ◦ |
| Comparative Example 5-2 | P2-3/40 | 50 | 50 | 12-1/60 | 98.9 | D2 | 0.6 | 0.5 | 2,600 | 130 | ◦ |
| Comparative Example 5-3 | P2-3/30 | 50 | 50 | 12-1/70 | 98.9 | D2 | 0.6 | 0.5 | 2,700 | 120 | ◦ |
| Comparative Example 5-4 | P2-3/50 | 50 | 50 | 12-1/50 | 96.5 | D2 | 3.0 | 0.5 | 2,500 | 110 | ◦ |
| Comparative Example 5-5 | P2-3/40 | 50 | 50 | 12-1/60 | 96.5 | D2 | 3.0 | 0.5 | 2,600 | 120 | ◦ |
| Comparative Example 5-6 | P2-3/30 | 50 | 50 | 12-1/70 | 96.5 | D2 | 3.0 | 0.5 | 2,700 | 110 | ◦ |
| Comparative Example 5-7 | P2-3/40 | 50 | 50 | 12-1/60 | 99.5 | None | 0 | 0.5 | 2,600 | 100 | ◦ |
| Comparative Example 5-8 | P2-3/40 | 50 | 50 | I2-a/60 | 98.9 | D1 | 0.6 | 0.5 | 2,700 | 110 | × |
| Comparative Example 5-9 | P2-3/100 | 50 | 50 | I2-1/ 0 | 98.9 | D1 | 0.6 | 0.5 | 2,700 | 120 | × |

(continued)

| | Resin component (P) | Resin composition | | Calcium carbonate (I) | Total amount of (P) and (I) (% by mass) | Dehydrating agent (D) | Dehydrating agent content (% by mass) | Water content (% by mass) | Tensile modulus (MPa) | Elongation (%) | Biodegradability |
|---|---|---|---|---|---|---|---|---|---|---|---|
| | | Lactic acid (% by mole) | 3-Hydroxy butyric acid (% by mole) | | | | | | | | |
| Comparative Example 5-10 | P2-3/40 | 50 | 50 | 12-1/60 | 99.3 | D1 | 0.2 | 0.5 | 2,600 | 120 | ◦ |
| Comparative Example 5-11 | P2-3/40 | 50 | 50 | 12-1/60 | 95.5 | D1 | 4.0 | 0.5 | 2,700 | 130 | ◦ |

As listed in Table 5 and Table 6, it has been found that the resin molded products obtained from the resin compositions according to the present invention has high numerical values in the tensile modulus and elongation and excellent strength of the resin molded products. It has been presumed that this is because the hydrolysis of the biodegradable resin was reduced at the time of molding.

The resin molded product obtained from the resin composition according to the present invention had excellent results in the degradability test and the biodegradability was not impaired.

The above effect was not observed in the resin molded product obtained from the resin composition that did not satisfy the requirements of the resin composition according to the present invention.

In particular, use of silica gel, which is known to have a dehydration action similar to calcium oxide, resulted in inferior strength of the resin molded product and thus the hydrolysis of the biodegradable resin was not reduced at the time of molding.

Although the data are not listed, the same results as the case where P2-3 was used were obtained when resins other than P2-3 listed in the item of "(Resin component (P))" were used in place of P2-3 as the resin.

## Claims

**1.** A resin composition comprising:

a biodegradable resin and heavy calcium carbonate particles in a mass ratio of 50:50 to 10:90, wherein
0.5% by mass or more and 3.5% by mass or less of calcium oxide is comprised relative to the resin composition, and
0.2% by mass or more of water is comprised relative to the resin composition.

**2.** The resin composition according to claim 1, wherein an average particle diameter of the heavy calcium carbonate particles is 1.0 μm or more and 10.0 μm or less.

**3.** The resin composition according to claim 1 or 2, wherein a BET specific surface area of the heavy calcium carbonate particles is 0.1 $m^2/g$ or more and 10.0 $m^2/g$ or less.

**4.** The resin composition according to any one of claims 1 to 3, wherein a roundness of the heavy calcium carbonate particles is 0.50 or more and 0.95 or less.

**5.** The resin composition according to any one of claims 1 to 4, wherein the heavy calcium carbonate particles are partially oxidized on a surface part of the heavy calcium carbonate particles.

**6.** The resin composition according to any one of claims 1 to 5, wherein the biodegradable resin comprises polylactic acid.

**7.** The resin composition according to any one of claims 1 to 5, wherein the biodegradable resin comprises a multicomponent hydroxyalkanoic acid copolymer made of lactic acid and a polyhydroxyalkanoic acid.

**8.** The resin composition according to claim 7, wherein a lactic acid fraction in the multicomponent hydroxyalkanoic acid copolymer is 20% by mole or more and 80% by mole or less.

**9.** The resin composition according to any one of claims 1 to 8, wherein the biodegradable resin comprises poly(L-lactic acid) having a weight average molecular weight (Mw) of 50,000 or more and 300,000 or less in a proportion of 10% by mass or more and 100% by mass or less relative to the entire biodegradable resin.

**10.** The resin composition according to any one of claims 1 to 9, wherein the resin composition is in a form of pellets.

**11.** A method for producing a resin molded product, the method comprising:

molding a resin composition, wherein
the resin composition comprises a biodegradable resin and heavy calcium carbonate particles in a mass ratio of 50:50 to 10:90,
the resin composition comprises 0.5% by mass or more and 3.5% by mass or less of calcium oxide relative to the resin composition, and

a water content of the resin composition at time of starting the molding is 0.2% by mass or more.

**12.** The method for producing according to claim 11, wherein the molding is under an environment of a temperature of 0°C or more and 50°C or less and a relative humidity of 75% RH or more.

**13.** The method for producing according to claim 11 or 12, wherein stretching treatment is not included.

**14.** The method for producing according to any one of claims 11 to 13, wherein the molding comprises melting and kneading the resin composition at 140°C or more and 220°C or less using a twin-screw extruder; and thereafter molding the resin composition in a sheet-like product using a T die.

**15.** The method for producing according to any one of claims 11 to 14, wherein the molding comprises melting and kneading the resin composition at 140°C or more and 220°C or less using a twin-screw extruder; and thereafter molding the resin composition by injecting the resin composition in a mold a mold temperature of which is maintained at 20°C or more and 110°C or less.

**16.** The method for producing according to any one of claims 11 to 15, wherein the resin molded product is a laminated product,
the laminated product comprises

a resin layer made of the resin composition, and
a surface layer made of a biodegradable resin covering at least one surface of the resin layer.

**17.** The method for producing according to any one of claims 11 to 16, wherein the resin molded product is a sheet.

**18.** The method for producing according to any one of claims 11 to 16, wherein the resin molded product is a container product.

# INTERNATIONAL SEARCH REPORT

International application No.
PCT/JP2020/025916

## A. CLASSIFICATION OF SUBJECT MATTER

Int. Cl. B29B11/16(2006.01)i, B32B27/20(2006.01)i, B32B27/36(2006.01)i, C08L67/04(2006.01)i, C08L101/00(2006.01)i, C05L101/02(2006.01)i, C08L101/16(2006.01)i, C08K3/22(2006.01)i, C08K3/26(2006.01)i, B29B7/48(2006.01)i, B29C48/08(2019.01)i, B29C48/305(2019.01)i, B29C48/40(2019.01)i
FI: C08L101/00, C08K3/26, C08L67/04, C08K3/22, B29B7/48, B29C48/08, B29C48/305, B32B27/36, B32B27/20 Z, B29C48/40, C08L101/16, C08L101/02 ZBP, B29B11/16

According to International Patent Classification (IPC) or to both national classification and IPC

## B. FIELDS SEARCHED

Minimum documentation searched (classification system followed by classification symbols)
Int. Cl. B29B11/16, B32B27/20, B32B27/36, C08L67/04, C08L101/00, C08L101/02, C08L101/16, C08K3/22, C08K3/26, B29B7/48, B29C48/08, B29C48/305, B29C48/40

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-144105 A (KAO CORP.) 02 July 2009, claims, paragraphs [0002], [0006], [0011]-[0015], [0026], examples | 1-14, 16, 17<br>1-18 |
| X<br><br>Y | JP 10-59466 A (SHIN-ETSU POLYMER CO., LTD.) 03 March 1998, claims, paragraphs [0003], [0005]-[0008], [0020], examples | 1-13, 15, 17, 18<br>1-18 |
| X<br><br>Y | JP 2000-239508 A (MITSUBISHI GAS CHEMICAL CO., INC.) 05 September 2000, claims, paragraphs [0004], [0011], [0012], examples | 1-13, 15, 17, 18<br>1-18 |
| Y | JP 2009-292875 A (KOBAYASHI KK) 17 December 2009, claims, paragraphs [0001]-[0011], examples | 1-18 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30.07.2020 | 11.08.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2020/025916

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-273582 A (OKURA INDUSTRIAL CO., LTD.) 13 October 1998, claims, paragraphs [0002], [0013], [0016], examples | 1-18 |
| A | JP 2016-106171 A (MITSUBISHI CHEMICAL CORP.) 16 June 2016, entire text | 1-18 |
| A | JP 2010-6885 A (ACHILLES CORP.) 14 January 2010, entire text | 1-18 |
| A | JP 2015-108160 A (TORAY INDUSTRIES, INC.) 11 June 2015, entire text | 1-18 |
| A | JP 2019-521238 A (OMYA INT AG) 25 July 2019, entire text | 1-18 |

Form PCT/ISA/210 (continuation of second sheet) (January 2015)

**INTERNATIONAL SEARCH REPORT**
Information on patent family members

International application No.
PCT/JP2020/025916

| Patent Documents referred to in the Report | Publication Date | Patent Family | Publication Date |
|---|---|---|---|
| JP 2009-144105 A | 02.07.2009 | (Family: none) | |
| JP 10-59466 A | 03.03.1998 | (Family: none) | |
| JP 2000-239508 A | 05.09.2000 | (Family: none) | |
| JP 2009-292875 A | 17.12.2009 | (Family: none) | |
| JP 10-273582 A | 13.10.1998 | (Family: none) | |
| JP 2016-106171 A | 16.06.2016 | US 2013/0316106 A1<br>entire text<br>EP 2671921 A1<br>CN 103339195 A | |
| JP 2010-6885 A | 14.01.2010 | (Family: none) | |
| JP 2015-108160 A | 11.06.2015 | US 2013/0331493 A1<br>entire text<br>EP 2679633 A1<br>CN 103384702 A<br>KR 10-2014-0007859 A | |
| JP 2019-521238 A | 25.07.2019 | EP 3272799 A1<br>entire text<br>CN 109496224 A<br>KR 10-2019-0031269 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015064566 A
- WO 2010082639 A
- JP 2004073123 A